# FASCICULE DE BREVET EUROPEEN

(11) **EP 1 666 349 B1**
(45) Date de publication et mention de la délivrance du brevet: **27.01.2010**
(21) Numéro de dépôt: 05024613.1
(22) Date de dépôt: 11.11.2005
(51) Int. Cl.: B62M 9/12

(54) **Dispositif de commande de changement de vitesse pour un système de transmission par chaine et pignons**
Schaltsteuerungssystem für ein Getriebesystem aus Kette und Zahnrädern
Shift control system for a transmission system comprising chain and sprockets

(30) Priorité: 01.12.2004 FR 0412738
(43) Date de publication de la demande: 07.06.2006
(73) Titulaire: SALOMON S.A.S., 74370 Metz-Tessy (FR)
(72) Inventeur: Mercat, Jean-Pierre, 74650 Chavanod (FR); Cauvin, Bertrand, 01400 Ars Sur Formans (FR)

(56) Documents cités:
- EP-A- 1 147 978
- EP-A- 1 394 036
- US-A- 4 384 864
- US-A- 4 504 250
- US-A- 4 530 677
- US-A- 4 946 425
- US-A- 5 358 451
- US-A- 5 470 277
- US-A- 5 494 307
- US-A1- 2002 025 868
- US-A1- 2002 061 797

## Description

L'invention concerne un dispositif de commande de changement de vitesse pour un système de transmission par chaîne et pignons.

Dans le domaine du vélo, la transmission est assurée en règle générale par une chaîne sans fin qui est renvoyée par un dispositif de transmission avant et un dispositif de transmission arrière.

Le dispositif avant comprend un ensemble de plateaux dentés de diamètre différent qui sont accouplés en rotation avec les manivelles du pédalier. De même le dispositif arrière comprend un ensemble de pignons dont le nombre de dents varie de façon progressive. Les pignons sont accouplés avec le moyeu de la roue arrière. Les nombres de dents du plateau et du pignon utilisés par la chaîne déterminent le rapport de transmission entre le pédalier et la roue. Un dérailleur avant et un dérailleur arrière permettent de forcer la chaîne à changer de plateau ou de pignon pour faire varier le rapport de transmission.

Habituellement le dérailleur arrière comprend un ou deux galets de renvoi de la chaîne sur lesquels passe le brin non tendu de la chaîne. Ces galets sont portés par un portique articulé, en général du type parallélogramme déformable, qui permet le déplacement des galets de renvoi selon une composante de direction parallèle à l'axe des pignons pour les mettre dans le plan d'un pignon défini.

A l'avant le dérailleur comprend de façon usuelle une fourchette mobile qui encadre le brin tendu de la chaîne.

Ces dérailleurs avant et arrière sont commandés de façon mécanique par des câbles reliés à des manettes ou des poignées de commande situées sur le guidon ou l'avant du cadre à portée de main du cycliste. Pour ces dérailleurs toute l'énergie utile pour le changement de vitesse est fournie par une action manuelle du cycliste sur les manettes ou poignées de commande. Un dérailleur selon le préambule de la revendication 1 est décrit dans le document EP 1 147 978.

Il existe également des dérailleurs motorisés. Ces dérailleurs mettent en oeuvre généralement un moteur électrique piloté par une commande électrique. Un tel dérailleur est décrit par exemple dans la demande de brevet US3919891.

Un autre mode de construction d'un dérailleur électrique est proposé dans la demande de brevet EP558425. Au lieu d'être fournie par un moteur électrique, l'énergie qui permet le déplacement de l'ensemble mobile est fournie par la rotation d'un des galets de renvoi qui est entraîné par la chaîne.

Selon la construction décrite, le dérailleur comprend un ensemble fixe monté sur le cadre et un ensemble mobile qui porte les galets de renvoi de la chaîne. L'ensemble mobile est monté coulissant le long d'un bras de support de l'élément fixe, et un dispositif d'indexation définit des positions stables de l'ensemble mobile en correspondance avec chacun des pignons de renvoi de la chaîne. Le mouvement de rotation d'un des galets de renvoi est transformé par le chemin de guidage d'une came en un mouvement de va-et-vient d'une crémaillère logée à l'intérieur du bras de support. Lors d'une commande de déraillement on établit momentanément une liaison solidaire entre la crémaillère et l'ensemble mobile pour provoquer le déplacement de cet ensemble mobile conjointement avec la crémaillère vers une position stable adjacente définie par le dispositif d'indexation.

Ce dispositif donne de bons résultats. Toutefois le mode de liaison entre l'ensemble fixe et l'ensemble mobile par un principe de coulissement impose des contraintes qui aboutissent à une construction finale relativement encombrante et des conditions d'étanchéité difficiles à maîtriser.

A côté de cela on connaît des systèmes de changement de vitesse entièrement mécaniques où on prélève par exemple sur l'arbre du pédalier une partie de l'énergie mécanique nécessaire à la commande du dérailleur. La demande de brevet EP482559 décrit relativement aux figures 16 et suivantes un dérailleur avant équipé d'un tel système. Egalement les demandes de brevet EP1378436, EP1394034, EP1394035, EP1394036 décrivent un dispositif de commande de changement de vitesse avec un système d'assistance. Ces dispositifs toutefois ont une construction relativement compliquée.

Dans ces conditions, compte tenu de ces dispositifs existants il existe un besoin pour un dispositif de commande de changement de vitesse ayant une construction améliorée sur le plan de l'encombrement et l'étanchéité de la construction.

A cette fin le dispositif de commande de changement de vitesse d'un système de transmission par chaîne et pignons selon l'invention comprend :
un organe de déraillement mobile selon une direction transversale au plan défini par la chaîne,
un arbre,
un premier élément moteur monté en rotation continue autour de l'arbre sous l'action d'un composant mobile extérieur, le premier element moteur étant constitué par un galet (40) entraîné en rotation par la chaîne du vélo ou par une collerette solidaire en rotation avec l'arbre du pédalier,
le premier élément moteur ayant un organe d'entraînement non centré ou non concentrique par rapport à l'axe de l'arbre permettant de générer un mouvement périodique au cours de sa rotation,
un deuxième élément de positionnement du dérailleur monté en rotation autour dudit arbre,
un dispositif d'indexation définissant une pluralité de positions angulaires stables mais non bloquées dudit deuxième élément de positionnement autour de l'arbre,
un troisième élément de commande monté en rotation libre autour dudit arbre,
au moins un dispositif de blocage pour bloquer de façon momentanée la rotation du troisième élément de commande autour de l'arbre,
un élément de transmission entre le premier élément moteur, le deuxième élément de positionnement et le troisième élément de commande,
l'élément de transmission étant mobile de façon non concentrique relativement audit arbre,
l'élément de transmission portant trois organes de liaison disposés de façon distante les uns par rapport aux autres, un premier organe de liaison suiveur relié à l'organe d'entraînement du premier élément moteur, un deuxième organe de liaison relié par une liaison pivotante au deuxième élément de positionnement, un troisième organe de liaison relié par une liaison pivotante au troisième élément de commande,
l'ensemble fonctionnant de telle façon que le premier élément moteur étant entraîné en rotation, le deuxième élément étant retenu dans une position angulaire stable par le dispositif d'indexation et le troisième élément de commande n'étant pas bloqué par le dispositif de blocage, l'élément de transmission soit animé d'un mouvement d'oscillation relativement à la deuxième liaison avec le deuxième élément de positionnement et qu'il anime le troisième élément de commande d'un mouvement rotatif alternatif autour de l'arbre par l'intermédiaire de sa troisième liaison, et qu'en cas de blocage momentané du troisième élément de commande par le dispositif de blocage, l'élément de transmission soit animé d'un mouvement relativement à sa troisième liaison avec le troisième élément de commande et qu'il anime le deuxième élément de positionnement d'une rotation autour de l'arbre par l'intermédiaire de sa deuxième liaison.

L'invention sera mieux comprise en se référant à la description ci-dessous et aux dessins qui lui sont attachés.

La description et les dessins illustrent différents aspects de l'invention qui sont notamment l'application de l'invention à un dérailleur arrière et à un dérailleur avant, la construction d'un dérailleur arrière équipé d'une liaison ajustable avec un bras d'indexage, un dispositif de pilotage réversible pour un dispositif de blocage à deux cliquets, un élément de positionnement avec compensation et mémorisation d'une commande de changement de vitesse.
La figure 1 représente un vélo en vue de côté.
La figure 2 est une vue générale du dérailleur arrière selon un premier mode de mise en oeuvre de l'invention.
La figure 3 est une vue en section du dérailleur de la figure 2.
La figure 4 montre le parallélogramme déformable du dérailleur.
La figure 5 représente le parallélogramme déformable dans une autre position.

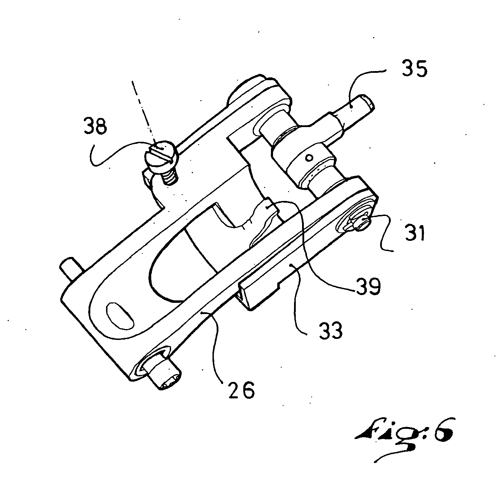

La figure 6 illustre le dispositif de réglage du parallélogramme déformable.
La figure 7 est une vue éclatée de l'ensemble moteur qui pilote la déformation du parallélogramme.
La figure 8 montre le galet de renvoi de cet ensemble moteur.

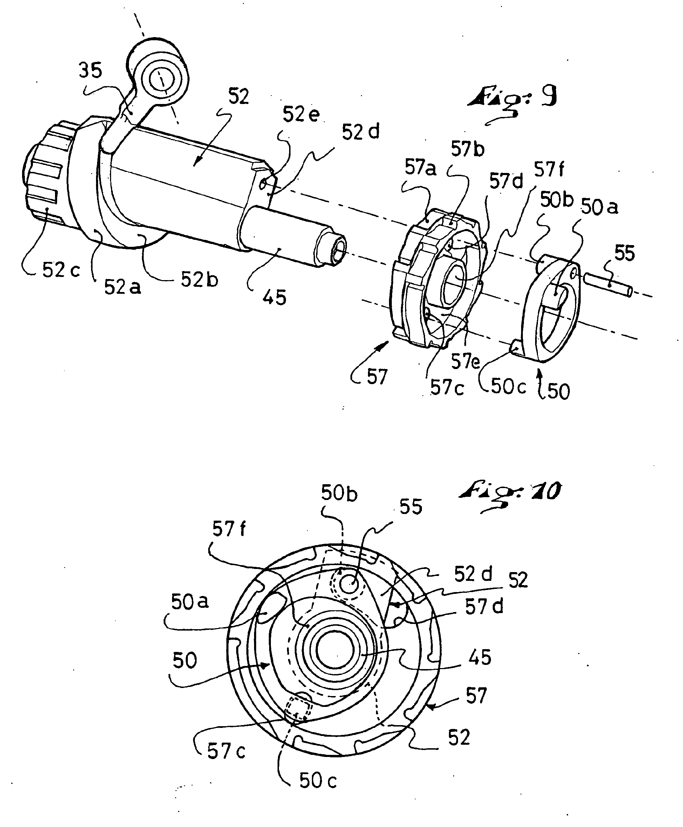

La figure 9 est une vue de détail des autres éléments de l'ensemble moteur.
La figure 10 montre les éléments de la figure 9 assemblés entre eux.
Les figures 11 et 12 illustrent des variantes de réalisation.
La figure 13 montre en perspective le dispositif qui pilote l'élément de commande de l'ensemble moteur.
La figure 14 représente en vue de face la came du dispositif de commande de la figure 13.
La figure 14a est un diagramme illustrant le fonctionnement de la came relativement à la figure 14.
La figure 15 montre la came et son moteur d'entraînement vu de dessus.
La figure 16 est une vue en section partielle qui explique le montage du doigt suiveur de la came de la figure précédente.
La figure 17 illustre le mode de recentrage de la came.
La figure 17a est un diagramme illustrant le fonctionnement de la came relativement à la figure 17.
Les figures 18 et 19 sont des diagrammes qui illustrent les signaux de commande selon deux cas de figure.
La figure 20 illustre une variante de montage des interrupteurs de commande.
La figure 21 montre en vue de côté un sous-ensemble de transmission avant selon un autre mode de mise en oeuvre de l'invention.
La figure 22 est une vue éclatée du boîtier de pédalier de la figure 21 et de l'ensemble moteur.
La figure 23 montre en vue éclatée de côté les différents composants de l'ensemble moteur.
La figure 24 représente en perspective l'élément de positionnement et son dispositif d'indexation.
La figure 25 montre un détail de construction de l'élément de positionnement.
Les figures 26a, 26b, 26c illustrent le mode de fonctionnement de l'élément de positionnement.
La figure 27 montre l'élément de commande et son dispositif de blocage.
La figure 28 représente l'élément de transmission.
La figure 29 illustre la liaison entre l'élément de transmission et les autres éléments.
La figure 30 montre le dispositif de pilotage des cliquets.
La figure 31 est une vue d'ensemble illustrant la disposition des éléments dans le carter.

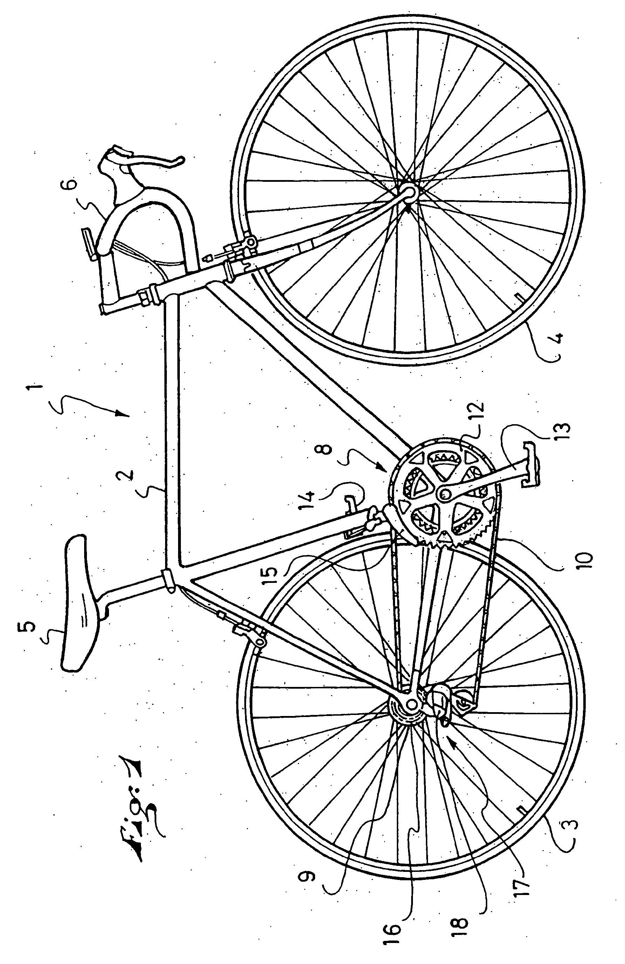

Le vélo 1 représenté en figure 1 comprend de façon connue un cadre 2, des roues arrière et avant 3 et 4, une selle 5, un guidon 6. Le vélo 1 est par ailleurs équipé d'un ensemble de transmission composé de deux sous-ensembles avant 8 et arrière 9 et d'une chaîne de transmission 10 reliant ces deux sous-ensembles.

Un ensemble de plateaux 12, des manivelles et pédales 13, 14 et un dérailleur avant 15 forment le sous-ensemble avant 8. Un ensemble de pignons 16 et un dérailleur arrière 18 forment le sous-ensemble arrière 17. De façon connue les plateaux d'une part, les pignons d'autre part ont des nombres de dents différents qui déterminent le rapport de transmission entre le pédalier et la roue arrière, et les dérailleurs permettent de faire varier le rapport de transmission en transférant la chaîne sur un plateau ou un pignon adjacent. La commande des dérailleurs se trouve sur le guidon ou sur le cadre, elle sera décrite plus en détails ultérieurement.

Naturellement ceci n'est pas limitatif et d'autres constructions peuvent aussi convenir. Par exemple on pourrait avoir un sous-ensemble avant avec seulement un plateau et pas de dérailleur, ou encore avec un plateau unique mais de diamètre variable ou encore un plateau associé à une boîte de vitesse à rapport variable.

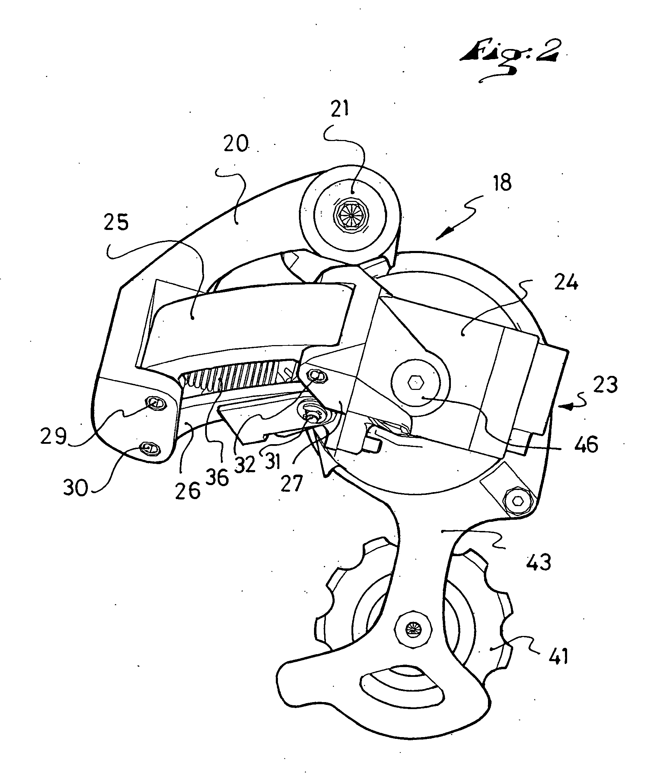

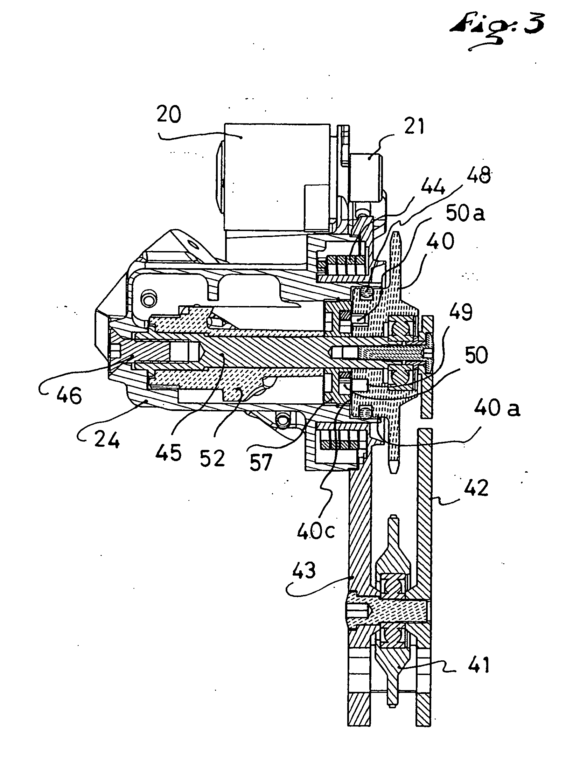

Les figures 2 et 3 représentent le dérailleur arrière 18 selon un premier mode non limitatif de mise en oeuvre de l'invention. Il comprend une patte de support 20 qui est prévue pour être assemblée au cadre du vélo par tout moyen approprié et notamment par une vis 21 orientée de façon axiale relativement à l'axe des pignons et de la roue. De façon classique la patte de support peut pivoter autour de la vis d'assemblage et elle est rappelée élastiquement par un ressort vers l'arrière du vélo de façon à rattraper le mou du brin non tendu de la chaîne.

Le corps 23 du dérailleur est relié à la patte de support 20 par un organe de mobilité qui est susceptible de déplacer le corps dans différentes positions indexées sur chacun des pignons de la cassette de pignons. Selon le mode de réalisation illustré l'organe de mobilité comprend deux biellettes 25, 26 qui sont articulées à la patte de support 20 et à la base 27 du corps par des axes d'articulation 29, 30, 31, 32 parallèles de façon à former globalement une structure à parallélogramme déformable. Comme cela est représenté sur la figure, les axes d'articulations 29, 30, 31, 32 sont disposés en oblique par rapport à une direction axiale définie par l'axe de la roue, pour que le corps 23 ait une trajectoire approximativement parallèle à la génératrice du tronc de cône formé par les pignons lors de la déformation du parallélogramme.

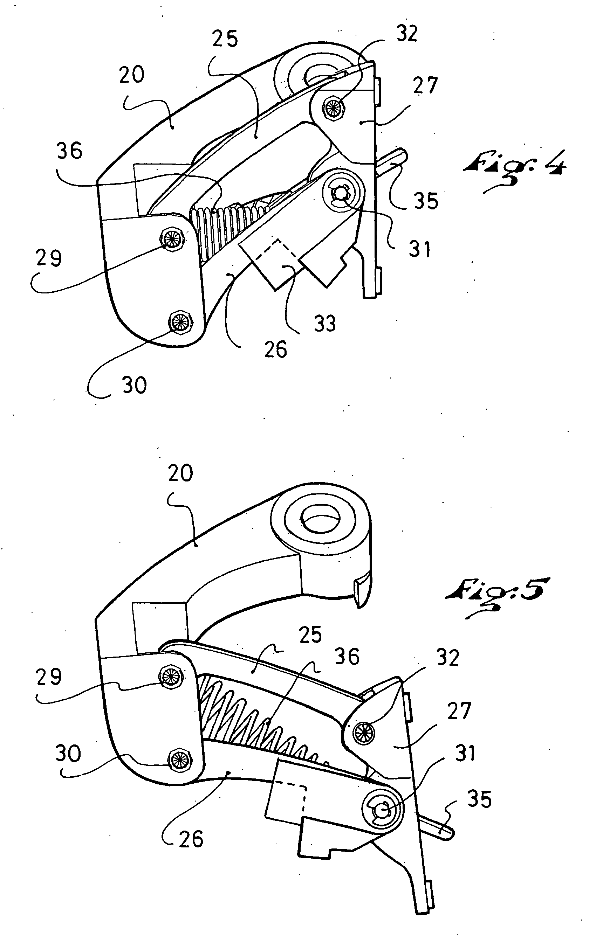

Les figures 4 et 5 représentent la structure à parallélogramme déformable dans deux positions extrêmes de fonctionnement.

De façon préférée, le déploiement de la structure à parallélogramme est piloté d'une part par un bras d'indexage 35 et d'autre part par un ressort de rappel 36. Le bras d'indexage 35 est engagé à l'intérieur du carter 24. Le bras 35 est solidaire en rotation avec un étrier 33 monté sur l'axe d'articulation 31 entre la biellette 26 et la base 27. Par exemple le bras 35 et l'étrier 33 sont solidaires en rotation avec l'axe 31 par l'intermédiaire d'une goupille traversante. L'axe 31 et l'étrier 33 sont solidaires en rotation par l'intermédiaire d'un accouplement mécanique au niveau de la tête de l'axe. D'autres modes de construction pourraient également convenir. Le bras et l'étrier pourraient également être montés sur l'axe 32.

L'étrier 33 chevauche la biellette 26, et un moyen de réglage permet d'ajuster l'écart angulaire entre l'étrier et la biellette. Selon le mode de réalisation illustré, le moyen de réglage est une vis 38 qui est vissée dans un logement taraudé de la biellette 26 et qui est en butée contre l'étrier 33. Le ressort de rappel 36 est accroché d'un côté à une patte 39 de l'étrier 33 et à l'axe d'articulation 29 qui est opposé à l'axe 31 dans la structure à parallélogramme.

Le ressort rappelle élastiquement la structure en parallélogramme dans la position repliée de la figure 4 où les biellettes sont ramenées à proximité de la patte de support 20. Egalement il assure un contact permanent entre la vis 38 et l'étrier 33, donc maintient un écart angulaire constant entre ces deux éléments. De plus il rattrape les jeux qui pourraient exister entre les différents éléments de la structure.

Si on exerce une action sur le bras d'indexage 35 en augmentant l'angle entre le bras et la base 27, alors la structure en parallélogramme déformable se déploie progressivement sur une plage allant jusqu'à la position extrême illustrée en figure 5. Inversement si on laisse l'angle diminuer, alors la structure se replie progressivement sous l'action de rappel du ressort 36.

L'étanchéité au niveau du bras d'indexage est réalisée entre les extrémités de l'axe 31 et la base 27. Cette étanchéité peut être facilement réalisée à l'aide d'un joint torique ou tout autre dispositif approprié.

Cette structure en parallélogramme déformable présente donc un encombrement réduit, une étanchéité facile à réaliser, et la liaison ajustable entre l'étrier et la biellette permet de régler le dérailleur simplement pour que la chaîne s'aligne correctement avec le plan des différents pignons.

D'autres constructions de l'organe de mobilité pourraient aussi convenir.

De façon classique le dérailleur comprend par ailleurs deux galets de renvoi 40 et 41 montés entre deux flasques 42 et 43 formant une chape. Le galet supérieur 40 est monté rotatif autour d'un arbre 45 porté par le corps 23 et la chape est articulée en rotation autour de cet axe. Par exemple l'arbre est assemblé au carter 24 par une vis 46 vissée dans son extrémité. Un ressort précontraint 44 logé dans le corps 23 rappelle la chape vers l'arrière du vélo. Le galet inférieur 41 est quant à lui libre en rotation autour de son axe de liaison avec la chape. De façon connue, les deux galets, la chape et le ressort de rappel compensent le mou du brin non tendu de la chaîne. Les deux galets tournent autour de leur axe de support respectif. Le galet supérieur 40 est de préférence denté selon le même pas que celui de la chaîne pour que la chaîne force ce galet à tourner avec son propre mouvement.

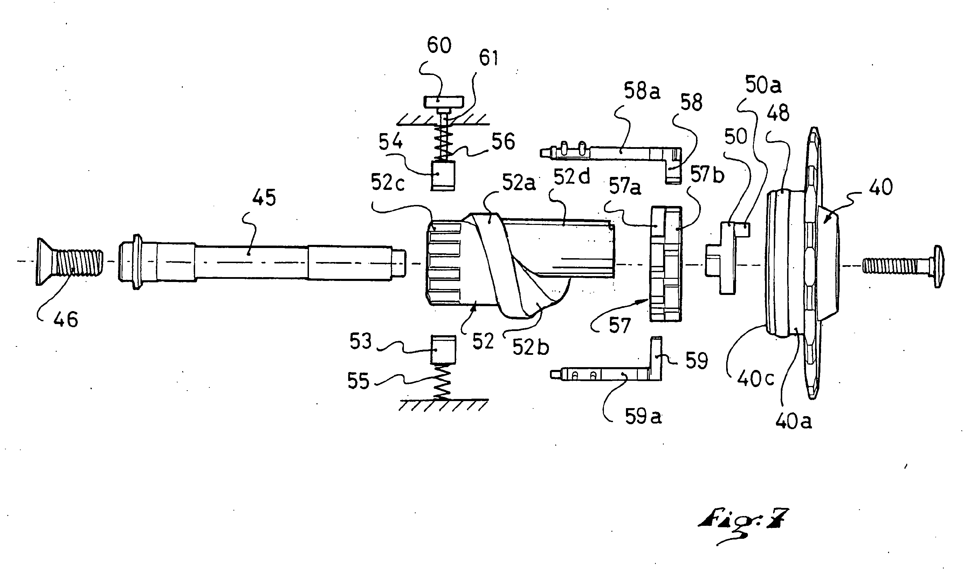

La figure 7 montre une vue éclatée des éléments de l'ensemble moteur selon un premier mode de mise en oeuvre de l'invention.

En premier lieu ces éléments comprennent le galet 40 qui est le premier élément moteur. Le galet 40 est porté par l'arbre 45 qui traverse le carter 24. Le galet est retenu sur l'arbre par tout moyen approprié et par exemple par une vis vissée à l'extrémité de l'arbre. Le galet 40 est monté en rotation libre sur l'arbre par exemple par l'intermédiaire d'un roulement. Comme cela a déjà été dit plus haut, l'autre extrémité de l'arbre est assemblée au carter 24 par tout moyen approprié, et par exemple par la vis 46. L'arbre 45 est orienté perpendiculairement au plan défini par la chaîne. En tant que premier élément moteur, le galet 40 est entraîné en rotation par la chaîne du vélo.

Selon le mode de construction illustré, le corps central 40a du galet 40 est cylindrique, il traverse la paroi du carter 24, un joint torique 48 ou tout autre moyen approprié assure de préférence l'étanchéité entre le carter et le galet à ce niveau.

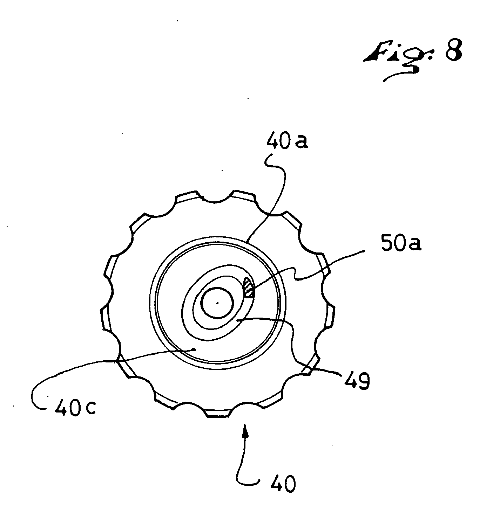

La figure 8 montre le galet 40 du côté de sa face 40c orientée vers l'intérieur du carter 24. Au niveau de cette face 40c, le corps 40a est creusé d'une rainure 49 qui est ici de forme générale ovale ou elliptique. La rainure est non concentrique avec l'axe de l'arbre 45, elle possède deux zones éloignées de l'axe et deux zones plus rapprochées. D'autres formes pourraient également convenir, notamment une forme circulaire ou ovale décentrée relativement à l'axe de l'arbre 45 et définissant une zone éloignée de l'axe et une zone rapprochée, une forme triangulaire définissant trois zones éloignées, correspondant aux trois sommets et trois zones plus rapprochées.

D'autres modes de construction pourraient aussi convenir. L'idée maîtresse est ici que la rotation du galet autour de l'arbre puisse générer un mouvement alternatif périodique par l'intermédiaire d'un organe d'entraînement non concentrique avec l'arbre ou non centré sur son axe. Une rainure de forme générale ovale ou elliptique forme un premier mode de réalisation d'un tel organe d'entraînement. Elle peut générer deux périodes d'un mouvement alternatif par tour de galet, une rainure de forme générale circulaire pourrait en générer un, une rainure de forme triangulaire trois, une rainure carrée quatre et ainsi de suite multipliant ainsi la fréquence d'oscillation du système et donc sa rapidité. Au lieu d'être en creux l'organe pourrait aussi être en relief, des variantes seront décrites ultérieurement dans ce sens.

L'ensemble moteur comprend par ailleurs à l'intérieur du carter 24 un élément de positionnement avec son dispositif d'indexation définissant des positions stables mais non bloquantes, un élément de commande et son dispositif de blocage, et un élément de transmission établissant une liaison entre l'organe d'entraînement du galet 40 et les éléments de positionnement et de commande. Le bras d'indexage 35 est en prise avec l'élément de positionnement précontraint par le ressort 36 de rappel de l'organe de mobilité.

Selon le mode de construction illustré dans les figures, l'élément de positionnement 52 se présente globalement comme un rotor. Il est monté en rotation libre autour de l'arbre 45. Le rotor 52 porte à sa périphérie une came 52a. La came 52a présente une face 52b approximativement hélicoïdale contre laquelle le bras d'indexage 35 s'appuie sous l'action du ressort 36. La rotation de la came 52a provoque le déplacement en rotation du bras 35 et de l'étrier 33 avec lequel il est solidaire.

Un dispositif d'indexation angulaire est prévu pour définir des positions stables du corps de dérailleur en correspondance avec chacun des pignons. Le rotor 52 a à sa périphérie une zone cannelée 52c contre laquelle deux pistons 53 et 54 s'appuient sous l'action des ressorts 55 et 56. Les pistons et les ressorts sont logés dans des logements appropriés du corps 23, les pistons sont guidés dans ces logements. Chaque creux de cannelure correspond à une position angulaire stable du rotor 52 et de sa came 52a autour de l'arbre 45. L'écartement des cannelures et la forme de la face hélicoïdale 52b sont déterminés en relation avec l'écartement des pignons pour que le pas de déplacement du corps de dérailleur entre deux positions stables successives soit sensiblement égal au pas d'écartement des pignons. Le réglage fin pour mettre la chaîne en alignement avec les pignons se fait à l'aide de la vis 38 entre l'étrier 33 et la biellette 26. Pour un dérailleur à dix vitesses, le pas angulaire des cannelures est de 36 degrés. Selon un mode préféré de construction l'un des pistons, le piston 54 dans la figure 7 agit sur un interrupteur 60 par l'intermédiaire d'une tige 61. Ainsi l'interrupteur change d'état en fonction de la position du piston 54 dans une cannelure d'indexation ou en dehors des cannelures. Au niveau de la commande du système, le signal issu de l'interrupteur 60 permettra de détecter à quel moment une nouvelle position stable du dérailleur aura été atteinte. L'interrupteur est placé sur la platine support de moteur qui sera décrite ultérieurement en relation avec la commande des cliquets.

La présence de deux pistons opposés permet d'équilibrer radialement les efforts sur le rotor et donc les frottements. Un seul piston d'indexation peut aussi convenir.

Le rotor 52 possède vers son extrémité située du côté du galet 40 un support 52d déporté par rapport à l'axe de rotation du rotor 52. Le support 52d est prévu pour un axe d'articulation parallèle à l'axe de l'arbre 45 et excentré par rapport à celui-ci qui sera décrit ultérieurement.

Un élément de commande 57 est situé entre l'élément de positionnement 52 et le galet 40.

L'élément de commande 57 se présente comme un tambour, il est monté en rotation libre autour de l'arbre 45, et il présente à sa périphérie deux couronnes dentées 57a, 57b dont les dents sont inclinées selon une face pentue de blocage et une face non bloquante. Les dents de chacune des couronnes ont une inclinaison inversée pour former avec deux cliquets 58 et 59 une double roue à rochet présentant deux sens de blocage différents selon le cliquet engagé dans la denture qui lui est associée.

Chacune des couronnes dentées présente un nombre de dents égal au nombre de transitions du dérailleur entre deux pignons successifs. De préférence, un espace est créé entre la première et la dernière dent. Ainsi pour un dérailleur à dix vitesses, chaque couronne dentée est divisée en dix secteurs, neuf d'entre eux ayant une dent et le dixième étant dépourvu de dent.

Les deux cliquets sont montés pivotants chacun autour d'un axe 58a, 59a porté par le carter 24 et orienté parallèlement à l'arbre 45. Par rapport à son axe 58a, 59a, chacun des cliquets est orienté l'un en direction de l'autre pour pouvoir bloquer l'élément de commande dans un sens différent de rotation. Les cliquets 58, 59 et les dentures 57a, 57b à la périphérie du tambour forment un dispositif de blocage de l'élément de commande.

La partie centrale de l'élément de commande 57 est évidée entre son moyeu 57f traversé par l'arbre 45 et les couronnes dentées 57a, 57b. Dans cette zone l'élément 57 comporte une paroi 57e avec deux évidements 57c, 57d qui sont approximativement diamétralement opposés. Ces évidements seront décrits plus en détail ultérieurement.

L'élément de transmission entre le galet 40, l'élément de positionnement 52 et l'élément de commande 57 est représenté sous la forme d'une bague flottante 50 avec un large évidement central traversé par l'arbre 45. L'évidement central de la bague 50 est de dimensions suffisantes pour que la bague puisse osciller ainsi que cela sera décrit plus tard sans interférence avec le moyeu 57f monté sur l'arbre 45. La bague est montée contre le galet 40 et elle se loge dans la partie centrale évidée de l'élément 57.

La bague a des organes de liaison avec chacun des éléments 40, 52, 57. Elle porte un premier plot saillant 50a qui est engagé dans la rainure 49 du galet 40 ainsi que cela est visible en figure 8. De préférence le plot 50a en section dans un plan radial est profilé en forme d'ogive pour faciliter la liaison à ce niveau et assurer une bonne transmission d'effort. La rotation du galet 40 imprime au plot 50a un mouvement alternatif au cours duquel il s'éloigne et se rapproche de l'axe de l'arbre 45.

L'organe de liaison avec l'élément de positionnement 52 est formé par une goupille 55 d'articulation qui lie le support 52d du rotor 52 avec un deuxième plot saillant 50b de la bague 50. Ce plot 50b traverse l'évidement 57d précédemment décrit en relation avec l'élément de commande 57. L'évidement 57d présente des dimensions suffisantes pour ne pas interférer avec le plot 50b.

Lorsque l'élément de positionnement se trouve dans une position stable définie par son dispositif d'indexation, la goupille 55 forme pour la bague 50 un axe de rotation autour duquel elle oscille sous l'effet de la circulation du plot 50a dans la rainure 49 du galet 40.

La bague 50 porte un troisième organe de liaison avec l'élément de commande 57. Ce troisième organe de liaison est un plot saillant 50c qui se loge dans le deuxième logement 57c de l'élément 57. La forme du logement 57c permet un accouplement en rotation de la bague 50 avec l'élément de commande 57, elle permet également un jeu radial du plot dans l'évidement sur une amplitude réduite. En variante on pourrait avoir ce jeu radial au niveau de la goupille 55.

Ainsi, la bague 50 reçoit un mouvement alternatif par son plot 50a et elle est en liaison avec l'élément de positionnement 52 dont les positions angulaires stables sont marquées par des points durs qui peuvent être surmontés et avec l'organe de commande 57 qui est libre en rotation mais qui peut être bloqué dans un sens ou dans un autre par l'un ou l'autre des cliquets. Dans ces conditions, au cours de son mouvement d'oscillation la bague 50 s'appuie sur l'élément qui lui offre la plus grande résistance et transmet son mouvement d'oscillation à l'élément qui offre la résistance la plus faible.

L'ensemble fonctionne de la façon suivante.

Au repos l'élément de positionnement 52 se trouve dans une position angulaire stable définie par l'engagement des pistons 53 et 54 dans l'une des cannelures de la zone 52c. Les deux cliquets sont dégagés des deux couronnes dentées 57a et 57b. L'élément de commande 57 est donc libre de pivoter autour de l'arbre 45.

Dans ces conditions la bague 50 oscille selon un mouvement pendulaire autour de la goupille 55 relativement à l'élément de commande et entraîne l'élément de commande 57 par l'intermédiaire du plot 50c dans un mouvement de rotation alternatif relativement à l'arbre 45.

Si un cliquet est engagé dans la denture qui lui est associée deux cas de figure se présentent selon le sens de rotation de l'élément de commande.

Dans la phase active du mouvement angulaire alternatif où l'élément de commande se déplace dans le sens de blocage de la roue à rochet, l'élément de commande 57 est donc bloqué par le cliquet dès que celui-ci rencontre la face pentue d'une dent. De ce fait la bague s'appuie sur l'élément de commande qui lui offre une résistance de blocage et transmet par réaction son mouvement oscillant à l'élément de positionnement 52 par l'intermédiaire du plot 50c. L'élément de positionnement est de ce fait forcé de pivoter vers la position d'indexation suivante dans le sens de rotation opposé de l'élément de commande 57 qui est entravé par le cliquet. On s'arrange pour que l'amplitude du mouvement de rotation que la bague transmet à l'élément de positionnement soit supérieure à un pas d'indexation de l'élément de positionnement 52 pour permettre le passage d'au moins une vitesse au cours d'une phase du mouvement de rotation alternatif. Pour un dérailleur à dix vitesses, le pas angulaire des cannelures d'indexation de la zone 52c et des dents de la couronne dentée 57 est de 36 degrés, l'amplitude angulaire du mouvement de la bague 50 est de 42,5 degrés. L'amplitude du mouvement angulaire (42,5 degrés) de la bague est supérieur au pas d'indexation de l'élément de positionnement 52 (36 degrés) pour permettre l'entraînement de l'élément et laisser un jeu angulaire (6,5 degrés) pour permettre l'engagement du cliquet contre la face pentue d'une dent. A cet effet l'élément de positionnement et les deux couronnes dentées sont indexés angulairement. Ces valeurs sont données seulement à titre indicatif.

Dans l'autre phase passive du mouvement alternatif où l'élément de commande se déplace dans le sens non bloquant du cliquet, alors la bague pivote relativement à l'élément de positionnement 52 qui offre une résistance au pivotement supérieure à celle de l'élément de commande. La bague transmet son mouvement oscillant à l'élément de commande et le cliquet glisse le long de la face non bloquante de la dent. Au cas où le cliquet franchit le sommet d'une dent, il retombe au pied de la face pentue sans interrompre le pivotement de l'élément de commande. Lors de l'alternance suivante le cliquet s'opposera à la rotation de l'élément de commande provoquant ainsi une rotation de l'élément de positionnement ainsi que cela a été décrit précédemment.

Si l'autre cliquet est engagé dans sa couronne dentée on a un fonctionnement similaire, sauf que l'élément de commande est entraîné dans l'autre sens de pivotement et que les phases active et passive sont inversées.

Ainsi en fonction du cliquet qui est engagé dans la série de dents associée de l'élément de commande le mouvement d'oscillation de la bague est transmis à l'élément de positionnement par une rotation dans un sens ou dans un autre. Chaque sens de rotation de l'élément de commande correspond à une rotation du bras d'indexage dans un sens ou un autre, et donc à une déformation de la structure en parallélogramme dans un sens ou un autre. On peut donc de cette façon commander un déplacement du corps du dérailleur pour une montée ou une descente de vitesse.

Il faut remarquer que lors d'une rotation de l'élément de positionnement c'est tout l'ensemble moteur qui pivote d'un pas autour de l'arbre 45 à l'exception des cliquets qui restent dans la même position. C'est la raison pour laquelle les couronnes sont dentées sur toute leur périphérie et que les dents à la périphérie des couronnes sont disposées selon le même pas angulaire que les cannelures du dispositif d'indexation.

Pour faciliter la transmission des efforts les deux plots 50b et 50c d'entraînement de l'élément moteur sont éloignés le plus possible l'un de l'autre et le plot 50a est situé approximativement à mi-distance entre ces deux plots. Par exemple comme cela est représenté pour la bague, les deux plots sont diamétralement opposés et le plot 50a se trouve à la périphérie de la bague à égale distance des deux autres. Dans ces conditions l'amplitude de déplacement des plots 50b et 50c se trouve amplifiée par rapport à l'amplitude de déplacement du plot 50a.

Egalement il faut remarquer que pour un mode de commande l'élément de positionnement tourne dans le même sens que le galet 40 et que pour un autre mode il tourne dans le sens inverse. De ce fait pour le premier mode, la bague 50 aura besoin de moins d'énergie pour entraîner le dispositif de positionnement que pour l'autre mode. Dans ces conditions on s'arrange pour qu'au niveau de l'indexation le passage d'une position stable à la suivante soit plus facile dans un sens que dans l'autre. Egalement on s'arrange pour que le premier mode de commande corresponde à une déformation du parallélogramme déformable où le ressort de rappel 36 est étiré.

Le mode de construction de l'organe d'entraînement qui vient d'être décrit n'est pas limitatif et d'autres constructions sont possibles.

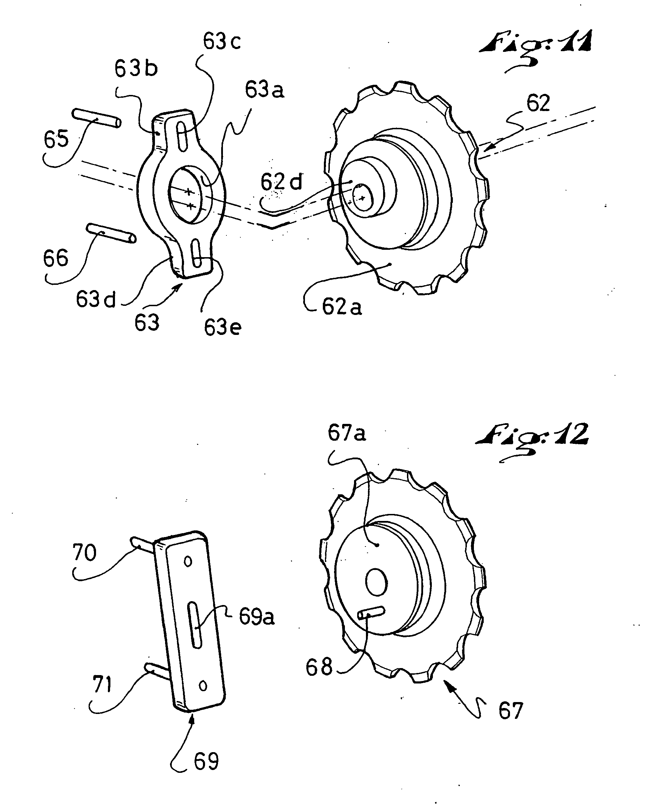

Par exemple comme l'illustre la figure 11, le corps 62a du galet supérieur 62 est prolongé par un moyeu 62d qui est cylindrique de révolution mais qui est excentré par rapport à l'axe de l'arbre. Le premier élément moteur est une sorte de balancier 63. Le balancier a un évidement central 63a par lequel il est monté en rotation libre relativement du moyeu excentré 62d. Le balancier a une branche supérieure 63b avec une lumière 63c traversée par une goupille de liaison 65 qui est encastrée dans un logement de l'élément de positionnement de la même façon que la goupille 55 précédente. A l'opposé, le balancier a une branche inférieure 63d avec une lumière 63e dans laquelle circule une goupille 66 qui est encastrée dans l'élément de commande.

Cette construction fonctionne de façon semblable à ce qui a été décrit précédemment. Le moyeu 62d anime le balancier d'un mouvement d'oscillation. Tant que l'élément de commande n'est pas bloqué par un cliquet, le balancier oscille en prenant appui sur la goupille 65 et transmet son mouvement à la goupille 66, c'est-à-dire à l'élément de commande. En cas de blocage de l'élément de commande, le balancier prend appui sur la goupille et transmet son mouvement à la goupille 65 c'est-à-dire à l'élément de positionnement.

Pour cette variante on pourrait intervertir la position des lumières et des goupilles. On pourrait aussi ajouter une bielle et remplacer la rainure par un pivot.

Selon la variante illustrée en figure 12, le corps 67a du galet supérieur 67 porte une goupille 68 orientée axialement et excentrée relativement à l'axe de rotation du galet. L'organe moteur est un barreau 69 qui a une lumière 69a dans sa partie centrale, et deux goupilles de liaison 70 et 71 vers chacune de ses extrémités. Ces goupilles sont engagées dans des logements respectivement de l'élément de commande et de l'élément de positionnement. De préférence un des logements est une lumière dans laquelle la goupille peut circuler librement.

Le mouvement alternatif est généré par la circulation de la goupille 68 dans la lumière 69.

Cette variante de construction présente le même mode de fonctionnement que ce qui a été décrit avant mais permettent de générer un seul aller et retour de la bague pour un tour de rotation du galet.

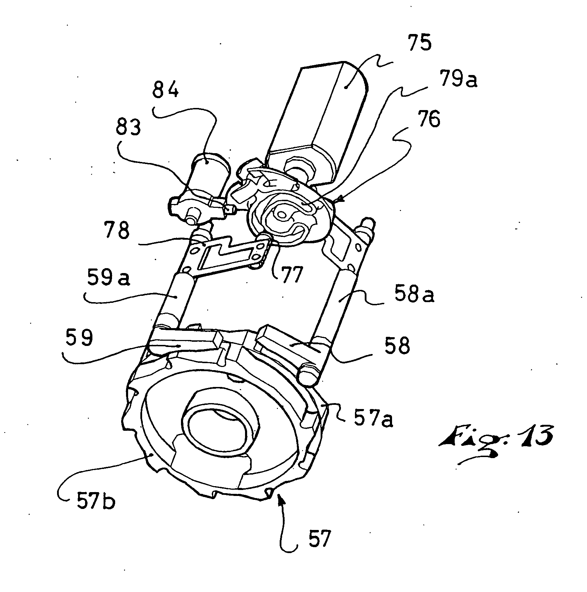

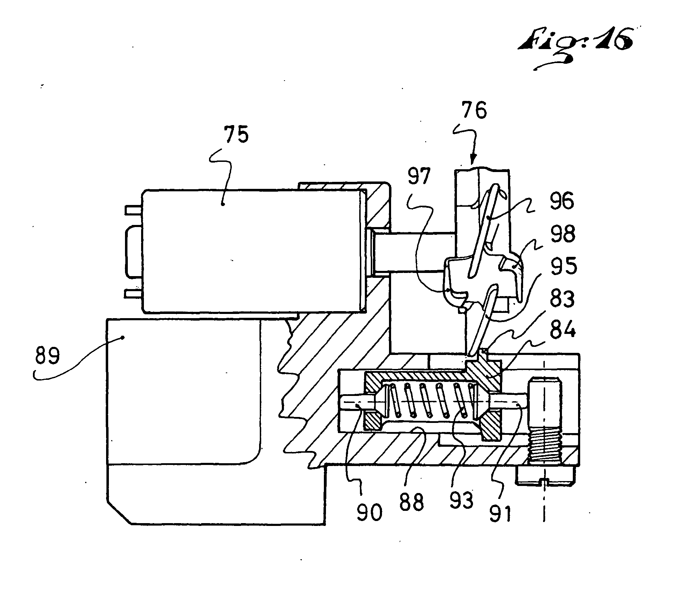

Différents dispositifs de pilotage sont possibles pour commander le blocage de l'élément de commande. Selon le mode de réalisation illustré en figure 13, c'est un moteur électrique 75 qui commande l'engagement et le dégagement des deux cliquets. Le moteur 75 est piloté par un circuit électronique 74, il est alimenté par un courant continu dont la polarité est inversée pour inverser le sens de rotation. Le moteur 75 et le circuit 74 sont montés sur une platine support de moteur 89 qui est représentée dans la figure 16.

En sortie d'arbre, le moteur présente une came 76 qui a sur chacune de ses faces un chemin de came radial pour chacun des cliquets. Seul le chemin de came radial 79 est visible dans la figure, l'autre chemin présente une forme inversée. La came 76 est ici en prise directe sur l'arbre du moteur 75.

Le chemin de came radial 79 forme une sorte de rainure dans laquelle est engagé un doigt suiveur radial 77. Le doigt suiveur radial est relié à l'axe 59a du cliquet 59 par une lamelle élastique 78. En suivant le chemin de came radial 79 le doigt suiveur radial 77 commande la rotation du cliquet 59 entre une position où le cliquet est dégagé de sa couronne dentée 57b et une position où il est engagé dans la couronne dentée. Au cas où une commande d'engagement est transmise au cliquet alors que l'extrémité du cliquet ne se trouve pas en regard de la face pentue d'une dent, la came accomplit le mouvement complet et c'est la lamelle élastique 78 qui se déforme pour compenser le mouvement que le cliquet ne peut pas réaliser et plaque celui-ci contre la face de la dent lui permettant de s'engager dans la dent dès que le sommet de la dent sera franchi.

L'autre cliquet présente le même mode de fonctionnement sauf que le doigt suiveur radial prend sa consigne sur l'autre face de la came.

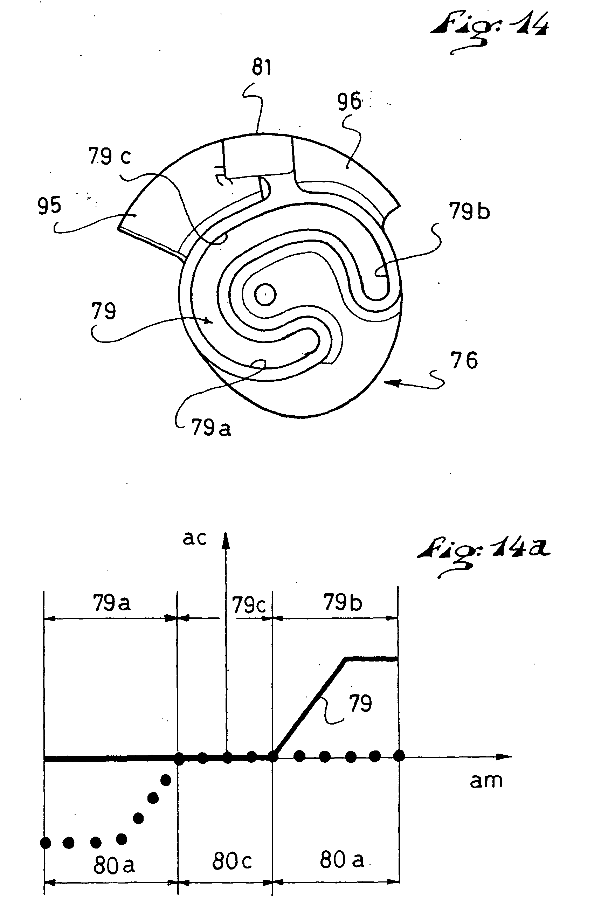

En se référant à la figure 14, le chemin de came radial s'étend sur un peu moins de 360 degrés autour de l'axe de rotation de la came. Le chemin de came radial a trois parties, une partie inactive 79a où le chemin de came radial reste à distance sensiblement constante de l'arbre, une partie active 79b où la distance à l'axe augmente progressivement, ce qui a pour effet de provoquer la rotation du cliquet et son engagement dans les dents de la couronne dentée. Entre les deux le chemin de came a une partie de recentrage 79c où la distance à l'axe est sensiblement la même que pour la partie inactive. Lorsque le doigt suiveur d'un cliquet se trouve dans la partie active de son chemin de came, l'autre doigt suiveur se trouve dans la partie inactive, et inversement. Lorsque le doigt suiveur se trouve dans la partie de recentrage, l'autre doigt suiveur est également dans la partie de recentrage.

Le diagramme de la figure 14a schématise l'angle des cliquets "**ac**" en fonction de l'angle moteur "am". On a reporté sur le diagramme les phases inactives 79a et 80a, actives 79b et 80b et de recentrage 79c et 80c des deux chemins de cames l'un relativement à l'autre, en fonction de la rotation du moteur. On obtient ainsi un recentrage angulaire de la came 76 avec une tolérance relativement large et une face active d'un cliquet correspondant à une phase inactive de l'autre.

Lors du déplacement de la came dans un sens de rotation ou l'autre, la rotation s'arrête lorsque l'un des doigts suiveurs bute contre l'extrémité de son chemin de came radial. Par exemple le circuit électronique 74 comprend un module qui détecte une surintensité dans l'alimentation du moteur résultant de son blocage en rotation et qui commande l'arrêt de l'alimentation au cas où cette surintensité est détectée. D'autres modes de commandes peuvent aussi convenir. Notamment on peut prévoir dans le circuit électronique 74 une temporisation qui coupe l'alimentation du moteur au-delà d'un temps déterminé égal ou supérieur au temps nécessaire au moteur pour effectuer sa course.

Le moteur électrique 75 assure également le retour de la came dans sa position angulaire médiane. Le dispositif qui permet le retour de la came dans sa position angulaire médiane comprend une rampe axiale 81 qui coopère avec un doigt suiveur axial 83.

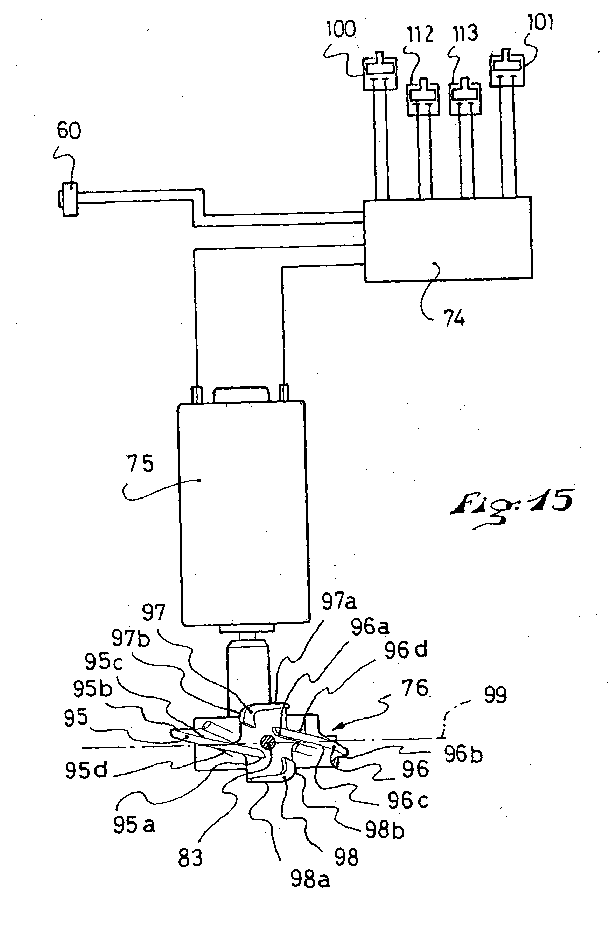

La rampe axiale comprend deux éléments 95, 96 en forme de pale hélicoïdale et deux butées d'arrêt 97, 98 en forme de dièdre. La rampe axiale est symétrique par rapport à la position de repos du doigt suiveur dans la position angulaire médiane de la came représentée en figure 15. Cette position de repos du doigt définit un plan perpendiculaire à l'axe de rotation de la came dont la trace dans le plan de la figure 15 est repérée par le trait mixte 99.

Le doigt suiveur 83 est mobile selon une direction axiale de chaque côté de ce plan 99. Il est par exemple monté sur un piston 84 qui est guidé en translation selon une direction axiale dans un logement 88 de la platine support du moteur 89. Le piston 84 est mobile de part et d'autre d'une position centrée dans laquelle il est rappelé par un ressort 93. Par exemple le piston est creux, et il renferme le ressort de rappel avec une tétine 90, 91 montée à chaque extrémité du ressort. Les tétines sont montées coulissantes relativement au piston, elles sont retenues au piston par leur base élargie et leur extrémité en saillie est en appui contre les parois du logement 88. De cette façon le piston peut se déplacer selon une direction axiale en comprimant le ressort et en entraînant avec lui l'une des tétines assurant ainsi un recentrage très stable selon la ligne 99 du fait de sa précontrainte bilatérale.

Les deux pales 95, 96 s'étendent chacune sur une portion angulaire de la came qui est plus petite que l'amplitude de rotation de la came 83 pour chacun de ses mouvements de rotation de part et d'autre de sa position angulaire médiane représentée dans la figure 15. La position relative des pales est définie en rapport avec les dimensions en section du doigt dans le plan de la figure 15. Les pales ont chacune une entrée 95a, 96a et une sortie 95b, 96b et deux faces actives 95c, 95d pour la pale 95 et 96c, 96d pour la pale 96.

Chaque pale est inclinée relativement au plan 99 de telle façon que son entrée et sa sortie se trouvent d'un côté différent du plan. De plus les entrées 95a, 96a des pales sont placées de chaque côté du plan 99. De même les sorties 95b, 96b des pales se trouvent de chaque côté du plan, le côté étant le côté opposé à celui de leur entrée respective. Compte tenu de leur inclinaison, les pales ont chacune une face active ventrale 95c, 96c en vis-à-vis et une face active dorsale 95d, 96d. Les entrées 95a, 96a sont écartées l'une de l'autre le long du périmètre de la came sur une distance supérieure à la dimension en section du doigt pour que dans la position angulaire médiane de la came représentée en figure 15 le doigt suiveur 83 puisse circuler librement entre les pales selon une direction axiale. Selon cette même direction axiale les deux entrées 95a et 96a des pales sont décalées l'une de l'autre de chaque côté du plan 99 sur une distance supérieure à la dimension en section du doigt pour que lors d'une rotation de la came le doigt 83 vienne naturellement au contact de la face ventrale de l'une ou l'autre des pales. Les sorties 95b et 96b des pales sont chacune déportées selon une direction axiale par rapport au plan 99 d'une distance supérieure à la moitié de la dimension en section du doigt.

Les butées d'arrêt 97 et 98 sont situées en vis-à-vis de part et d'autre du plan 99 au niveau des entrées 95a et 96a des pales et dans le prolongement des faces dorsales 95d, 96d avec une face 97a, 98a sensiblement parallèle au plan 99 et une face 97b, 98b approximativement parallèle à une direction axiale.

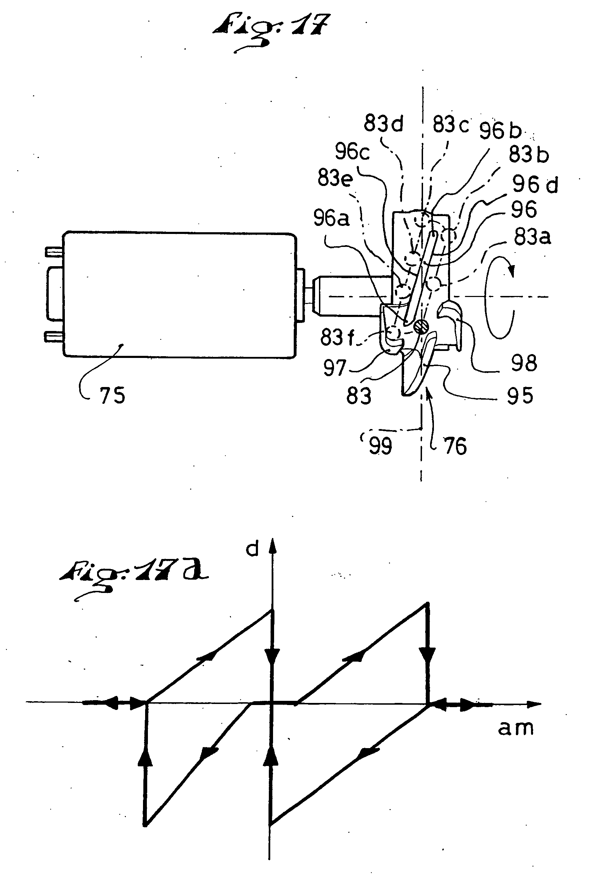

La figure 17 illustre les différentes positions du doigt 83 relativement à la pale 96 pour un cycle d'aller et de retour de la came 76, étant entendu que c'est la came 76 qui est entraînée en rotation. Au cours de la phase d'aller le doigt 83 est dévié par la face ventrale 96d de la pale. Les positions 83a et 83b illustrent cette phase du mouvement. Puis le doigt 83 échappe à la pale 96 et il est ramené dans le plan 99 par le ressort de rappel 93. Ceci est figuré par la position 83c. Il est rappelé que la rotation de la came est stoppée dans cette phase d'aller par la venue en butée du doigt suiveur de cliquet au bout de son chemin de came radial 79. Dans la phase de retour de la came, le doigt 83 est dévié par la face dorsale 96c de la pale. Ceci est illustré avec les positions 83d et 83e du doigt. Puis le doigt échappe à la pale, mais du fait de son inertie il est capté par la butée d'arrêt 97. Ceci est illustré avec la position 83f du doigt. La rotation de la came est alors bloquée et ce blocage dure tant que l'alimentation du moteur est maintenue. Dès que l'alimentation est coupée la came relâche sa contrainte sur le doigt 83 qui est rappelé dans sa position médiane par le ressort.

Pour un cycle de rotation du moteur dans l'autre sens, le doigt coopère de la même façon avec la pale 95.

Le diagramme de la figure 17a représente le déplacement axial "d" du doigt 83 en fonction de l'angle "am" de rotation du moteur 75 dans ses deux sens de rotation.

Le circuit électronique qui pilote la rotation du moteur est commandé par deux interrupteurs 99 et 100, chacun commandant l'un des sens de rotation du moteur. Le circuit 74 est également relié à l'interrupteur 60 qui renseigne sur la position angulaire de l'élément de positionnement à ses positions indexées stables.

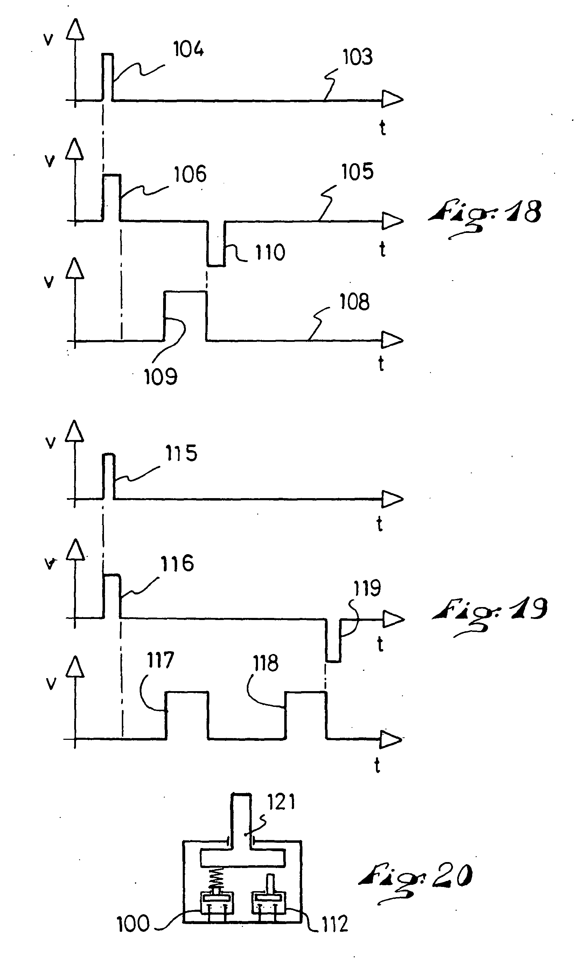

La figure 18 montre un diagramme à trois courbes qui illustrent différents signaux de commande. La courbe du haut 103 illustre le signal issu d'un des interrupteurs de commande 100 ou 101, et le créneau 104 correspond à une commande de changement de vitesse.

La courbe du milieu 105 est relative à la tension d'alimentation du moteur. Le créneau 106 de cette courbe correspond à la tension qui est appliquée au moteur pour amener la came 76 depuis sa position angulaire médiane dans le sens de rotation associé à l'interrupteur qui a été activé. Le créneau 106 représenté correspond à une tension positive. Dans le cas où l'autre interrupteur de commande serait activé on aurait une tension de polarité inverse.

La largeur du créneau est pilotée par un module du circuit 74 qui détecte une surintensité aux bornes du moteur, cette surintensité indiquant que le moteur est bloqué car la came a atteint sa position angulaire finale. Comme cela a déjà été dit, en variante la largeur du créneau 106 peut être pilotée par une temporisation. A titre d'exemple le temps de commande est de l'ordre de 10 ms.

La courbe du bas représente le signal issu de l'interrupteur 60. Le front montant du créneau 109 indique que l'élément de positionnement 52 a quitté sa position stable d'indexation, et le front descendant indique que l'élément de positionnement 52 est sur le point d'atteindre une position d'indexation adjacente. Le front montant 109 intervient un intervalle de temps après le front descendant du créneau 106, l'intervalle de temps étant le temps nécessaire pour que l'élément de commande 57 achève son cycle de mouvement alternative et qu'une de ses dents vienne buter contre le cliquet qui a été activé par la rotation du moteur. La largeur du créneau est variable, elle dépend de la vitesse de rotation de l'élément de positionnement qui est liée à la vitesse de rotation du galet 40.

Une fois que le front descendant du créneau 109 est détecté, le circuit 74 envoie au moteur 75 un signal de commande illustré par le créneau 110 de polarité inverse à celle du créneau 106 pour rappeler le moteur en sens inverse jusqu'à la position angulaire médiane de la came 76.

Naturellement on peut prévoir des temporisations additionnelles pour décaler dans le temps les signaux les uns par rapport aux autres.

La figure 19 représente un diagramme semblable dans le cas d'une commande simultanée de plusieurs changements de vitesse.

Dans ce cas, par exemple le circuit 74 reçoit un signal de commande depuis deux interrupteurs 112, 113 affectés à ce mode de commande. Le signal 115 de l'un de ces interrupteurs déclenche un créneau 116 de commande du moteur. Comme précédemment l'élément de positionnement 52 réagit au bout d'un intervalle de temps déterminé, puis il se déplace vers la position d'indexation adjacente, ce qui génère le créneau 117 au niveau de l'interrupteur 60. Après que cette position stable a été atteinte, l'élément de commande 57 est entraîné en sens inverse, le cliquet qui a été activé ne s'oppose pas à cette rotation, et grâce à la lamelle métallique qui lui est associée le cliquet glisse le long de la face non bloquante puis redescend au pied de la face bloquante de la dent adjacente de sa couronne dentée. Lorsque la rotation de l'élément de commande s'inverse à nouveau, le cliquet bloque à nouveau l'élément de commande ce qui provoque la rotation de l'élément de positionnement pour un nouveau pas d'indexation générant de ce fait un second créneau 118 au niveau de l'interrupteur 60. Une fois le front descendant du créneau 118 détecté, le circuit 74 adresse au moteur un créneau de commande 119 de retour dans la position angulaire médiane.

Les interrupteurs 112 et 113 peuvent être intégrés respectivement avec les interrupteurs 100 et 101 dans un même organe de commande activé par un actionneur à différents degrés d'appui. Ceci est illustré dans la figure 20 pour les interrupteurs 100 et 112. Pour une première course d'appui l'actionneur 121 active l'interrupteur 100 et pour une course d'appui plus importante l'interrupteur 112 est actionné. D'autres modes de construction pourraient également convenir.

En variante de la commande par les interrupteurs 112 et 113 on pourrait mesurer la durée pendant laquelle l'interrupteur 100 ou 101 est activé et déclencher un changement de vitesse multiple, double, ou même triple ou plus en fonction de cette durée d'activation. D'autres modes de commande peuvent également convenir.

Notamment on pourrait piloter l'élément de commande à l'aide de deux électroaimants comme cela est décrit dans la demande de brevet EP 558 425. Une commande à moteur est cependant préférée car elle est économique, il n'y a qu'un seul élément électromécanique qui est compact, fiable et léger.

On pourrait également piloter l'élément de commande à l'aide d'une commande mécanique comme cela est décrit par exemple dans la demande de brevet FR2621372 et 2621373.

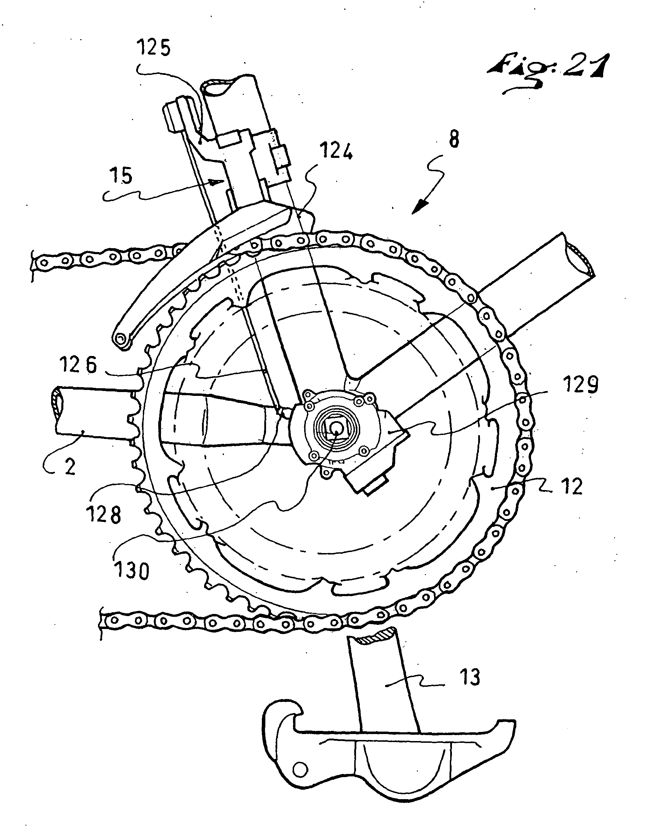

Les figures 21 et suivantes illustrent l'invention appliquée à un dérailleur avant. La différence avec le dérailleur arrière réside principalement dans le diamètre des plateaux et aussi dans le fait que le dérailleur agit sur le brin tendu de la chaîne. Il se peut alors que la tension de la chaîne soit telle qu'elle s'oppose au déplacement de la fourchette du dérailleur en particulier dans les secteurs dentés du plateau qui ne sont pas prévus pour faciliter le déraillement de la chaîne. En règle générale un plateau comprend un ou deux secteurs dentés qui favorisent le déraillement de la chaîne. Ce ou ces secteurs sont disposés dans des zones correspondant aux temps morts où les bras de manivelle passent par la verticale et où l'effort du cycliste sur le pédalier passe par un minimum.

La figure 21 représente de façon schématique le sous-ensemble avant 8 avec les plateaux 12 et le dérailleur avant 15. Pour des raison de clarté, seul le plus grand plateau est représenté de façon partielle, les autres plateaux sont figurés en trait mixte. Généralement il y a deux plateaux ou trois.

Le dérailleur avant 15 est de tout type approprié avec ou sans ressort de rappel et ne sera pas décrit en détail. Par exemple comme cela est visible dans la figure il comprend une fourchette 124 qui chevauche le brin tendu de la chaîne et qui forme le corps du dérailleur. La fourchette est portée par un ensemble de biellettes qui sont reliées au cadre et qui assurent un déplacement de la fourchette au moins selon une direction parallèle à l'arbre du pédalier. Le déplacement de la fourchette 124 est piloté par un bras 125 solidaire de l'une des biellettes. Le bras 125 est relié par une tringle 126 à un bras d'indexage 127 en sortie de l'ensemble moteur 128 qui va maintenant être décrit. En variante de la tringle, on pourrait utiliser un câble de traction couplé avec un ressort de rappel de faible raideur au niveau des biellettes.

L'ensemble moteur 128 est logé dans un carter 129 monté sur le cadre 2 et traversé de part en part par l'arbre 130 du pédalier.

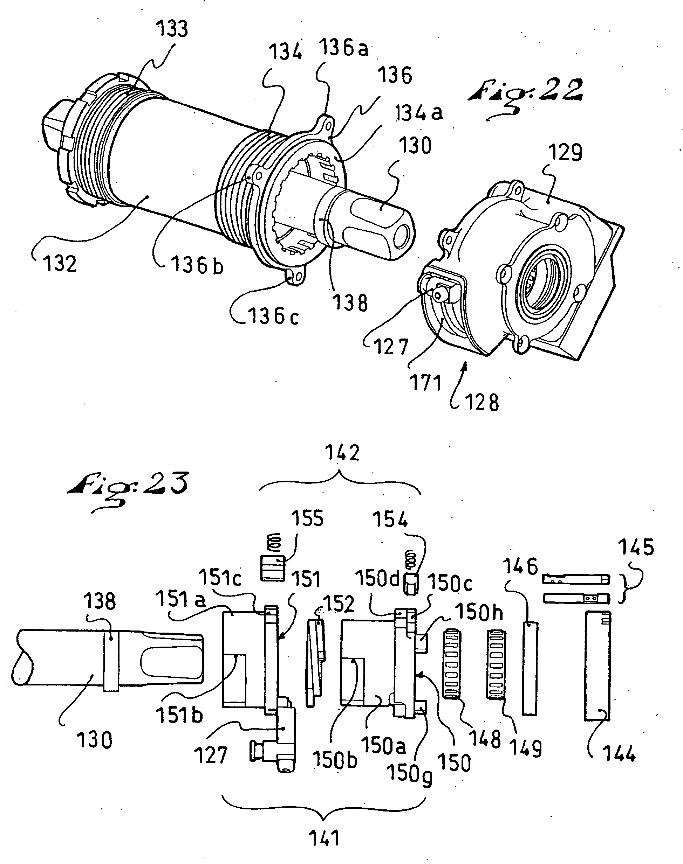

La figure 22 montre l'ensemble moteur 128 avant son montage sur l'arbre 130. Cette figure représente un boîtier de pédalier. Ce boîtier est de tout type approprié et ne sera pas décrit en détail. De façon classique il comprend l'arbre 130, des roulements qui ne sont pas visibles dans cette figure et deux bagues filetées 133, 134 de serrage du boîtier dans la boîte de pédalier du cadre qui encadrent une entretoise 132.

Par rapport à un boîtier classique, le boîtier de la figure 22 présente en plus une bride 136 qui est pincée entre la boîte de pédalier et la tête 134a de la bague de serrage 134. La bride a des pattes 136a, 136b, 136c pour l'accrochage du carter 129. Le carter est ainsi immobilisé par rapport au cadre dans une orientation où son bras d'indexage 127 peut actionner convenablement le dérailleur 15.

Le carter 129 est traversé par une extrémité de l'arbre 130, et comme on peut le voir dans la figure 22, cette extrémité de l'arbre 130 présente une collerette 138. La collerette 138 est cylindrique de révolution autour d'un axe parallèle à l'axe de l'arbre et excentrée par rapport à cet axe. De cette façon la collerette forme un premier élément moteur qui est non centré sur l'axe de l'arbre, mais solidaire en rotation avec cet arbre.

La figure 23 montre en vue éclatée les différents éléments de l'ensemble moteur qui sont logés à l'intérieur du carter 129.

Ces éléments sont un élément de positionnement 141 avec son dispositif d'indexation 142, un élément de commande 144 avec son dispositif de blocage 145, et un élément de transmission 146 relié à l'élément moteur d'une part, les éléments de commande et de positionnement d'autre part. Accessoirement la figure 23 représente deux roulements 148 et 149 qui sont situés entre l'arbre 130 et l'élément de positionnement 141.

L'élément de positionnement 141 comprend ici deux éléments concentriques, un rotor 150 et une roue motrice 151 qui sont accouplés en rotation par l'intermédiaire d'un ressort précontraint 152 de compensation angulaire.

Le bras d'indexage 127 est solidaire de la roue motrice 151 en rotation. Dans le cas préféré d'une liaison entre le bras 127 et le dérailleur 15 par une tringle rigide, il existe un accouplement direct entre la rotation de la roue motrice 151 et le déplacement de la fourchette 124 pour les deux sens de rotation de la roue. Le ressort de compensation 152 lie le rotor 150 et la roue motrice 151 en rotation, et il autorise un déphasage angulaire de ces deux éléments dans les deux sens de rotation au rotor lorsque le couple transmis entre ces deux éléments dépasse un seuil prédéterminé.

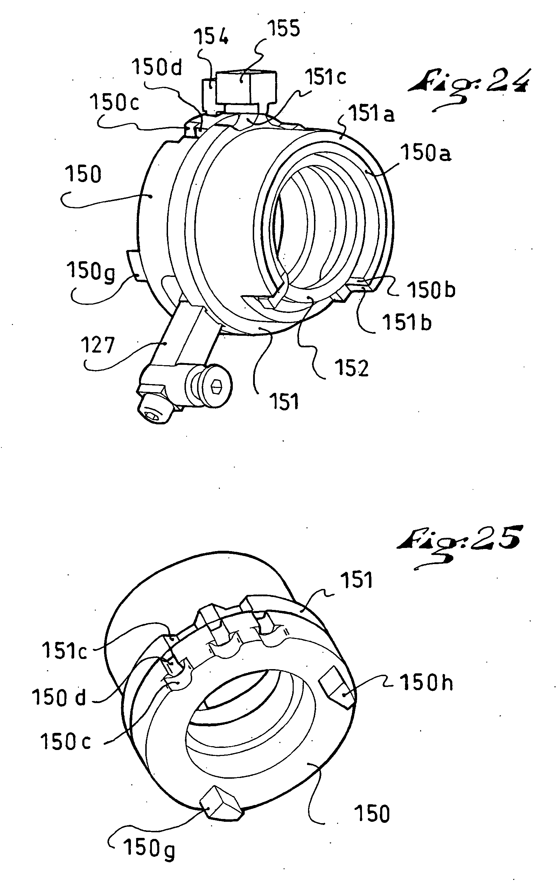

Par exemple comme cela est visible dans les figures 23 et 24 le rotor et la roue motrice ont chacun un moyeu central 150a, 151a, chacun avec une découpe 150b, 151 b. Les deux moyeux sont emboîtés l'un dans l'autre, de sorte que les découpes 150b, 151b viennent en coïncidence. Le ressort 152 est un ressort cylindrique de torsion, ses deux extrémités sont repliées de façon à s'appuyer contre les bords des deux découpes 150b, 151b. Lorsque l'un des éléments pivote par rapport à l'autre, il entraîne avec lui une des extrémités du ressort qui rappelle ces éléments l'un par rapport à l'autre de façon à remettre les découpes 150b, 151b en coïncidence.

D'autres modes de construction peuvent aussi convenir pour rappeler élastiquement les deux éléments.

Le rotor 150 a un premier dispositif d'indexation qui définit des positions stables de l'élément de positionnement en rapport avec chacun des plateaux du pédalier. Par exemple le rotor 150 présente à sa périphérie une zone cannelée 150c, avec des cannelures prévues pour coopérer avec un piston 154 rappelé par un ressort. Le piston et le ressort sont logés dans le carter 129. Le nombre et la disposition des cannelures sont déterminés en fonction de la longueur du bras d'indexage 127 et de son orientation initiale pour qu'à chacune des positions stables le bras place la fourchette 124 du dérailleur en correspondance avec chaque plateau du pédalier.

Lorsque le rotor 150 est déplacé d'une position stable à l'autre il entraîne avec lui la roue motrice par l'intermédiaire du ressort de compensation 152. L'accouplement du ressort permet au rotor d'atteindre sa nouvelle position stable même si la chaîne du fait de sa tension s'oppose momentanément au déplacement de la fourchette et donc à la rotation de la roue motrice 151.

En effet dans le cas où la zone du plateau en service qui est en regard de la fourchette n'est pas favorable à un déraillement de la chaîne, la chaîne peut s'opposer par sa tension au déplacement de la fourchette, et par là à la rotation de la roue motrice. Généralement un plateau présente un ou deux secteurs dentés favorables à un déraillement de la chaîne qui sont de préférence situés dans les zones de temps mort du plateau. Donc il se peut qu'on ait besoin d'un tour de pédalier ou un demi tour selon les cas pour qu'un secteur favorable se présente sous la fourchette.

Dans une telle hypothèse l'élément de positionnement est équipé d'un second dispositif d'indexation qui retient le rotor 150 dans sa nouvelle position stable tant que la roue motrice n'a pas rattrapé le rotor et que le déraillement ne s'est pas produit.

Le second dispositif d'indexation comprend un second piston 155 qui coopère avec une zone cannelée 151c de la roue motrice 151 et également une zone cannelée 150d du rotor 150. Le piston 155 est mobile et il est rappelé par un ressort. Le second piston 155 coopère à la fois avec une zone cannelée de la roue motrice et une zone cannelée du rotor.

Le piston 154 marque les positions d'indexation stables du rotor 150. De ce fait le creux des cannelures et la bosse du piston sont relativement évasés.

Le piston 155 assure une fonction de verrouillage momentané du rotor 150. De ce fait les cannelures de la zone 150d et les pans latéraux de la partie engageante du piston 155 sont relativement abrupts.

Les cannelures de la zone cannelées 151c pilotent la descente et la montée du piston 155. Le creux des cannelures est relativement large, et les pans latéraux inclinés pour pouvoir créer un effet de rampe sur le piston 155.

La figure 25 montre la position relative des zones cannelées du rotor et de la roue motrice en l'absence de décalage angulaire de ces deux éléments.

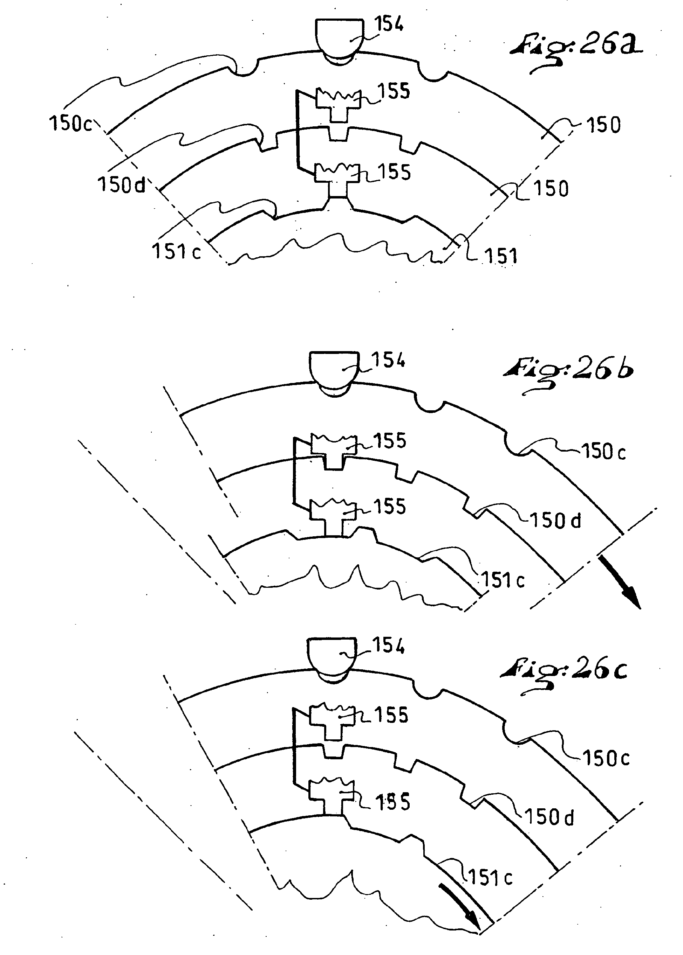

Les figures 26a, 26b, 26c illustrent de façon schématique une rotation de l'élément de positionnement dans le cas où la roue motrice est momentanément gênée dans sa rotation par la tension de la chaîne.

Le mode de représentation illustré correspond à un pédalier à trois plateaux, c'est-à-dire que la zone cannelée 150c du rotor 150 comporte trois creux, chacun en relation avec un plateau du pédalier.

Comme on peut le voir dans la figure 25, les creux des zones cannelées 150c et 150d coïncident les uns avec les autres. Les zones cannelées 151c et 150d sont côte à côte et les cannelures sont en opposition, c'est-à-dire qu'un sommet de l'une correspond à un creux de l'autre.

Dans la figure 26a, le piston 154 se trouve dans le ceux du milieu de la zone 150c. Le piston 155 est en regard du creux du milieu de la zone 150d, mais il est maintenu hors du creux du fait que la partie engageante de la dent se trouve sur un sommet de la zone 151c.

Dans la figure 26b, le rotor 150 a pivoté jusqu'à ce qu'une position d'indexation adjacente marquée par l'engagement du piston 154 dans un creux adjacent de la zone 150c. La roue motrice 151 a amorcé une rotation partielle qui permet au piston 155 de s'abaisser car il se trouve simultanément en regard du creux des zones 150d et 151c.

Dans cette position le ressort 152 exerce un rappel sur le rotor vers sa position d'indexation d'origine et sur la roue motrice vers sa position d'indexation suivante.

Le rotor est cependant bloqué par l'engagement du piston 155 dans la zone cannelée 150d.

Lorsqu'un secteur favorable se présente au niveau de la fourchette, le ressort 152 du fait de sa tension achève le déplacement de la roue motrice vers sa nouvelle position d'indexation, et le piston 155 est dégagé des creux de la zone cannelée 150 par un effet de rampe généré par la zone cannelée 151c et l'arrivée d'un nouveau sommet sous la partie d'engagement du piston 155.

Un tel mode de construction permet de mémoriser une commande de changement de vitesse en partant de commande relativement brève jusqu'à ce que le dérailleur soit en mesure d'exécuter la commande en question.

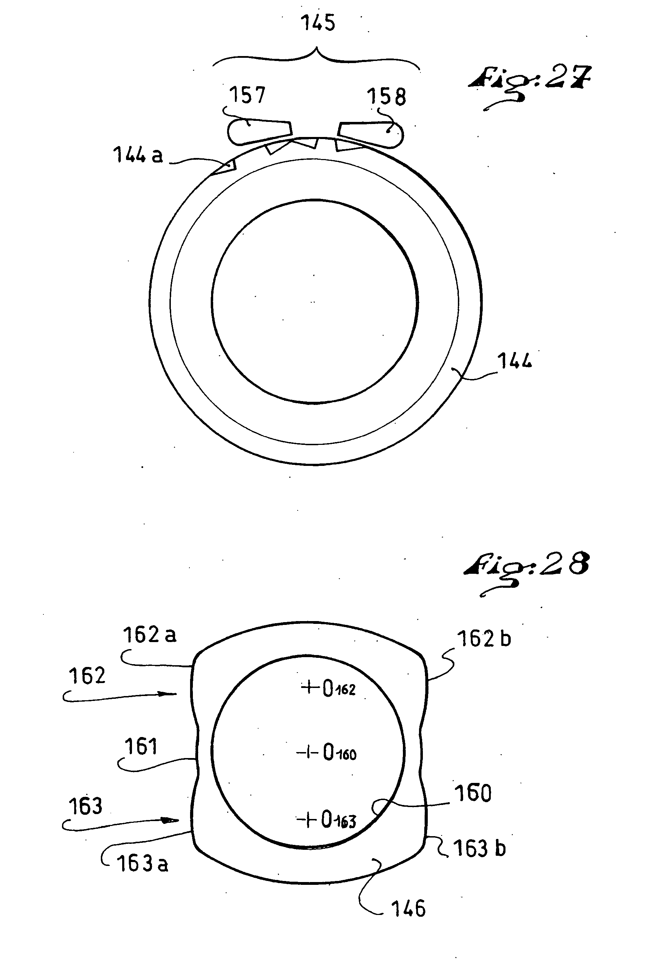

L'élément de commande 144 associé à l'élément de transmission 141 est représenté en figure 27. Comme dans le cas précédent, il est une sorte de tambour monté en rotation libre par rapport à l'axe de l'arbre 130. Dans le mode de réalisation illustré, le tambour 144 est guidé par l'extérieur par rapport au carter 129, mais il pourrait aussi être monté sur l'axe le cas échéant avec un roulement intermédiaire.

Le dispositif de blocage 145 est du même type que celui qui a été décrit précédemment. Il comprend deux cliquets rotatifs 157 et 158 qui sont susceptibles de s'engager dans les dents d'une zone dentée 144a située à la périphérie de l'élément de commande 144. Comme dans le cas précédent, les dents comprennent une face pentue de blocage et une face non bloquante. Les cliquets coopèrent avec les dents de façon à pouvoir bloquer la rotation du tambour dans ses deux sens de rotation. Pour un pédalier à trois plateaux, le dispositif de commande doit pouvoir transmettre au plus deux commandes de montée et deux commandes de descentes. On a donc à chaque fois deux dents qui sont prévues pour coopérer avec un cliquet pour transmettre une commande de montée ou de descente de plateau.

En régime normal les deux cliquets sont dégagés des dents. Lors d'une commande de changement de vitesse, l'un des cliquets s'abaisse selon qu'il s'agit d'une commande de montée ou de descente pour bloquer une des dents.

L'élément de transmission 146 se présente comme une bague. Il présente un logement central 160 ajusté au diamètre de la collerette excentrique 138 de l'arbre 130.

Extérieurement la bague 146 a la forme d'une section de diabolo avec d'un côté et de l'autre de la portion médiane étroite deux portions circulaires 162 et 163 comprenant chacune deux arcs 162a, 162b et 163a, 163b. Ces portions circulaires sont centrées en des points fictifs O₁₆₂ et O₁₆₃ qui sont situés d'un côté et de l'autre du centre O₁₆₀ du logement central 160.

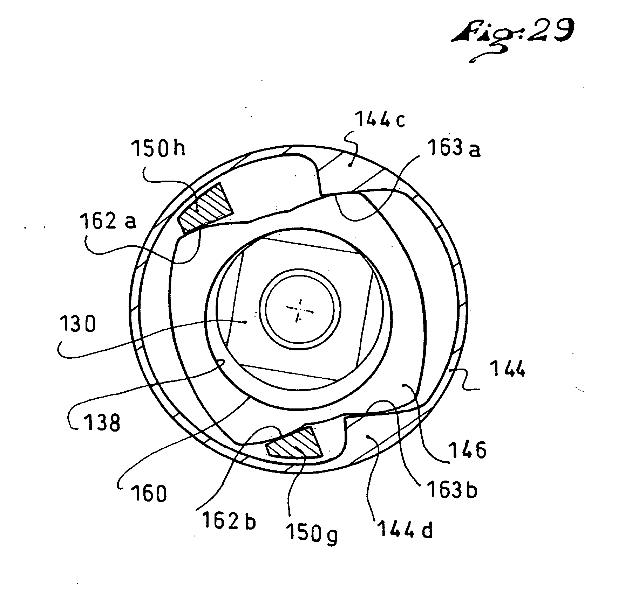

La figure 29 représente la bague 146 montée sur la collerette excentrique 138 et l'arbre 130 et logée dans l'évidement central de l'élément de commande 144. Lorsque l'arbre 130 tourne, le centre O₁₆₀ du logement central de la bague est animé d'un mouvement circulaire autour de l'axe de l'arbre 130.

Dans son évidement central, l'élément 144 a deux patins 144c et 144d qui sont parallèles et qui sont écartés l'un de l'autre d'une distance correspondant au diamètre de la portion circulaire 163. Les patins définissent une rainure dans laquelle circule la portion circulaire 163. De la même façon des patins 150g et 150h issus du rotor 150 forment une rainure pour la portion circulaire 162.

Ainsi le principe de construction reprend sensiblement celui de la variante décrite relativement à la figure 11. D'autres modes de construction pourraient également convenir.

L'ensemble fonctionne de la façon suivante.

En régime général, le rotor est maintenu dans une position stable d'indexation par son dispositif d'indexation, et la bague 144 est entraînée dans un mouvement circulaire par la collerette excentrique 138.

De ce fait, la bague s'appuie sur les deux patins 150g et 150h qui sont immobiles, et elle est animée d'un mouvement complexe qui comprend un mouvement de va et vient dans la rainure formée par les patins et un mouvement d'oscillation autour du centre fictif O₁₆₂ de la portion 162. Il résulte de ce dernier mouvement que la portion 163 est animée d'un mouvement de balancier qui entraîne avec lui l'élément de commande 144 selon un mouvement alternatif autour de l'axe de l'arbre 130.

L'écartement de cliquets et la disposition des dents de la zone dentée 144a est déterminé pour qu'une dent de blocage circule sous chacun des cliquets.

Lorsque l'un des cliquets est abaissé il bloque une dent de l'élément 144 lorsque cette dent revient sur lui. De ce fait l'élément de commande s'immobilise, il retient la portion 163 de la bague ce qui renvoie le mouvement de balancier de la bague vers sa portion 162. La portion 162 entraîne alors avec elle le rotor qui quitte sa position stable en direction d'une position adjacente.

Une fois cette position atteinte, le cliquet en prise est relevé pour libérer l'élément 144 avant que la bague amorce son mouvement de retour qui ramènerait le rotor vers sa position d'origine.

Selon le cliquet qui est actionné, l'élément de commande 144 est bloqué dans un sens ou un autre, de ce fait il peut entraîner l'élément de positionnement dans un sens ou un autre.

Les distances entre les centres fictifs O₁₆₀, O₁₆₂ et O₁₆₃, le pas de la denture de la zone 144a, le pas des zones cannelées 150c, 150d et 151c sont déterminés les uns en fonction des autres de telle façon que l'amplitude totale du mouvement de balancier de l'élément 146 soit capable de faire pivoter les éléments 144 ou 150 d'un angle supérieur à un pas respectivement de denture ou d'indexation.

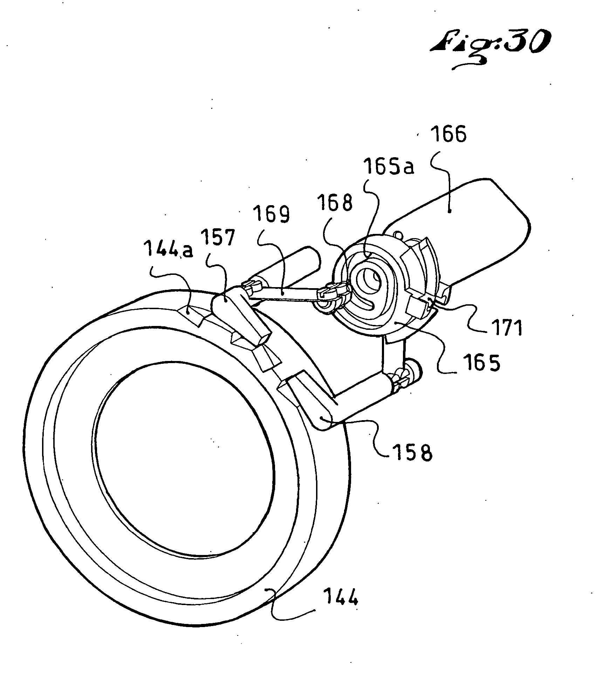

La figure 30 montre l'élément de commande 144 et son dispositif de pilotage. Ce dispositif est semblable à celui qui a été décrit précédemment, avec une came 165 montée sur l'arbre d'un moteur électrique 166. La came 165 présente un chemin de came radial sur chacune de ses faces, chaque chemin de came est relié à un cliquet par l'intermédiaire d'une lamelle élastique. Dans la figure 30 on peut voir le chemin de came radial 165a qui pilote le cliquet 157 par l'intermédiaire du doigt suiveur 168 et de la lamelle élastique 169. La came présente en outre une came axiale 171 qui est suivie par un doigt suiveur radial non représenté dans la figure. Tous ces éléments sont semblables à ceux décrits précédemment relativement aux figures 13 à 20, on se référera donc à cette partie de la description pour plus de détails. Un dispositif de pilotage à électroaimants ou mécanique est aussi possible ici.

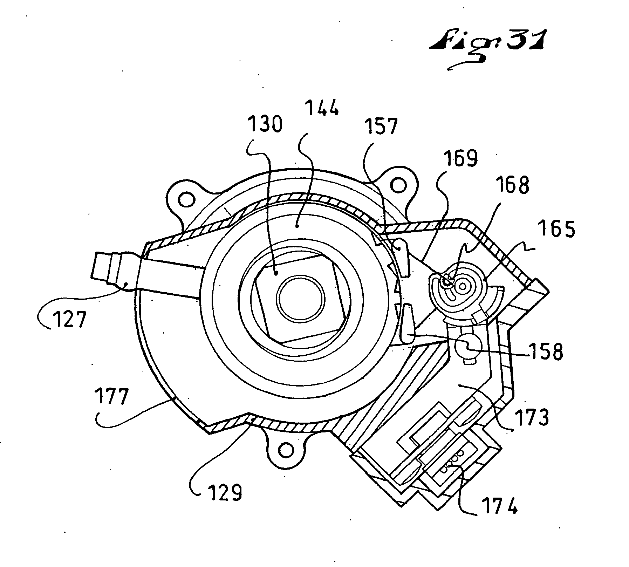

La figure 31 est une vue d'ensemble qui montre la mise en place des différents éléments dans le boîtier 129.

Ainsi on peut voir dans la figure le bras d'indexage 127 qui traverse la paroi du carter au niveau d'une ouverture 177, également la came 165 qui pilote les cliquets 157 et 158, la platine support de moteur 173 qui porte également le circuit électronique et un connecteur 174 de liaison.

L'étanchéité de l'ensemble moteur est réalisé par un joint disposé entre l'arbre 130 et la paroi du carter traversée par l'arbre, ainsi qu'un soufflet non visible dans les figures qui enveloppe l'ouverture 177, le bras d'indexage 127 et la base de la tringle 126. D'autres moyens d'étanchéité pourraient aussi convenir.

Ainsi l'invention qui vient d'être décrite permet la réalisation d'un dérailleur d'encombrement réduit et avec une étanchéité facile à maîtriser au niveau des pièces en mouvement puisqu'elle est réalisée sur des mouvements de rotation.

## Revendications

1. Dispositif de commande de changement de vitesse d'un système de transmission par chaîne et pignons comprenant:
un organe de déraillement (40, 62, 67, 124) mobile selon une direction transversale au plan défini par la chaîne,
un arbre (45, 130),
un premier élément moteur (40, 138) est monté en rotation continue autour de l'arbre sous l'action d'un composant mobile extérieur,
le premier élément moteur ayant un organe d'entraînement (49, 62d, 68, 138) non centré ou non concentrique par rapport à l'axe de l'arbre permettant de générer un mouvement périodique au cours de sa rotation,
un deuxième élément (52, 142) de positionnement du dérailleur monté en rotation autour dudit arbre (45, 130) et apte à déplacer un bras d'indexage (35, 127) de l'organe de déraillement,
un dispositif d'indexation (52c, 53; 54, 142) définissant une pluralité de positions angulaires stables mais non bloquées dudit deuxième élément de positionnement autour de l'arbre,
un troisième élément (57, 144) de commande monté en rotation libre autour dudit arbre,
au moins un dispositif de blocage (58, 59, 145) pour bloquer de façon momentanée la rotation du troisième élément de commande autour de l'arbre,
**caractérisé en ce que**:
le premier élément moteur étant constitué par un galet (40) entraîné en rotation par la chaîne du vélo ou par une collerette (138) solidaire en rotation avec l'arbre (130) du pédalier,
un élément de transmission (50, 63, 67, 146) entre le premier élément moteur, le deuxième élément de positionnement et le troisième élément de commande,
l'élément de transmission (50, 63, 67, 146) étant mobile en rotation de façon non concentrique relativement audit arbre,
l'élément de transmission (50, 63, 67, 146) portant trois organes de liaison disposés de façon distante les uns par rapport aux autres, un premier organe de liaison suiveur (50a, 63a, 69a, 160) relié à l'organe d'entraînement (49, 62d, 68, 138) du premier élément moteur, un deuxième organe de liaison (50b, 63c, 70, 162) relié par une liaison pivotante au deuxième élément de positionnement, un troisième organe de liaison (50c, 63e, 71, 163) relié par une liaison pivotante au troisième élément de commande,
l'ensemble fonctionnant de telle façon que le premier élément moteur étant entraîné en rotation, le deuxième élément étant retenu dans une position angulaire stable par le dispositif d'indexation et le troisième élément de commande n'étant pas bloqué par le dispositif de blocage, l'élément de transmission soit animé d'un mouvement d'oscillation relativement à la deuxième liaison avec le deuxième élément de positionnement et qu'il anime le troisième élément de commande d'un mouvement rotatif alternatif autour de l'arbre par l'intermédiaire de sa troisième liaison, et qu'en cas de blocage momentané du troisième élément de commande par le dispositif de blocage, l'élément de transmission soit animé d'un mouvement relativement à sa troisième liaison avec le troisième élément de commande et qu'il anime le deuxième élément de positionnement d'une rotation autour de l'arbre par l'intermédiaire de sa deuxième liaison.

2. Dispositif de commande selon la revendication 1, **caractérisé en ce que** le composant mobile extérieur est l'action de pédalage ou de rotation des roues.

3. Dispositif selon l'une des revendications 1 à 2, **caractérisé par le fait que** l'organe d'entraînement est une rainure (49) non concentrique avec l'axe de l'arbre (45) présente dans un galet (40) mobile en rotation autour de l'axe de l'arbre (45), que l'élément de transmission est une bague (50) ayant un plot saillant (5a) engagé dans la rainure (49).

4. Dispositif selon l'une des revendications 1 à 2, **caractérisé par le fait que** l'organe d'entraînement est un moyeu (62d) ou une collerette (138) excentré relativement à l'axe de l'arbre (45, 130) et que l'élément de transmission est un balancier (63) ou une bague (146) monté en rotation sur le moyeu ou la collerette excentré, respectivement.

5. Dispositif selon l'une des revendications 1 à 2, **caractérisé par le fait que** l'organe d'entraînement est une goupille (68) excentrée relativement à l'axe de l'arbre (45) et que l'élément de transmission est un barreau (69) avec une lumière centrale (69 parcourue par la goupille.

6. Dispositif selon la revendication 1, **caractérisé par le fait que** sur l'élément de transmission (50, 63, 69, 146) le deuxième organe de liaison (50b, 63c, 70, 162) et le troisième organe de liaison (50c, 63e, 71, 163) sont éloignés l'un de l'autre et sensiblement à égale distance du premier organe de liaison suiveur (50a, 63a, 69a, 160).

7. Dispositif selon la revendication 1, **caractérisé par le fait que** l'élément de positionnement est un rotor (52) monté en rotation autour de l'arbre et portant à sa périphérie une came (52a) d'entraînement d'un bras d'indexage (35) de l'organe de déraillement mobile (40, 62, 67).

8. Dispositif selon la revendication 1, **caractérisé par le fait que** l'élément de positionnement (142) comprend un rotor (150) lié à l'élément de transmission (146) par un organe de liaison (150g, 150h), et une roue motrice (151) portant un bras d'indexage (127) de l'organe de déraillement (124), le rotor et la roue motrice étant montés en rotation autour de l'arbre (130), et étant reliés entre eux par un ressort (152) de compensation angulaire.

9. Dispositif selon la revendication 8, **caractérisé par le fait que** le dispositif d'indexation (142) de l'élément de positionnement (141) comprend deux pistons d'indexation (154, 155) et trois zones cannelées (150c, 150d, 151c), que le premier piston (154) coopère avec une zone cannelée (150c) d'indexation du rotor (150) et que le second piston (155) coopère avec une zone cannelée (151c) de la roue motrice (151) et une zone cannelée (150d) de verrouillage du rotor (150).

10. Dispositif selon la revendication 1 où l'organe de déraillement est un galet (40) porté par une structure à parallélogramme déformable comprenant des bras (25, 26) et une base (27) reliés entre eux par des axes d'articulation (29, 30, 31, 32), **caractérisé par le fait que** le bras d'indexage (35) est solidaire en rotation avec un étrier (33) monté sur l'axe d'articulation (31) entre l'une (26) des biellettes et la base 27, que l'étrier (33) chevauche ladite biellette 26, et qu'un moyen de réglage permet d'ajuster l'écart angulaire entre l'étrier (33) et la biellette (26).

11. Dispositif selon la revendication 1, **caractérisé par le fait que** le troisième élément de commande (57, 144) présente à sa périphérie des dents ayant chacune une face pentue de blocage et une face non bloquante pour deux cliquets de blocage (58, 59, 157, 158).

12. Dispositif selon la revendication 11, **caractérisé par le fait que** chacun des cliquets (58, 59, 157, 158) est relié au chemin de came radial (79a, 165a) d'une came (79, 165).

13. Dispositif selon la revendication 12, **caractérisé par le fait que** la came est entraînée par un moteur (75, 166) à deux sens de rotation.

14. Dispositif selon la revendication 13, **caractérisé par le fait que** la came (76) a une rampe axiale (81) suivie par un doigt suiveur axial (83) pour un retour de la came dans une position angulaire médiane.

15. Dispositif selon l'une des revendications 11 à 14, **caractérisé en ce qu'**en fonction du cliquet (58, 59, 157, 158) engagé dans la série de dents associées de l'élément de commande (57, 144), l'élément de commande (57, 144) est entraîné dans un sens de pivotement ou un autre.

## Claims

1. Gear change control device for a chain and sprocket transmission system, comprising:
a derailleur member (40, 62, 67, 124) able to move in a direction transverse to the plane defined by the chain,
a shaft (45, 130),
a motorizing first element (40, 138) mounted to rotate continuously about the shaft under the action of an external moving component,
the motorizing first element having a drive member (49, 62d, 68, 138) which is not centred or not concentric with respect to the axis of the shaft so that it generates a periodic movement as it rotates,
a positioning second element (52, 142) for positioning the derailleur, this element being mounted to rotate about the said shaft (45, 130) and able to move an indexing arm (35, 127) of the derailleur member,
an indexing device (52c, 53, 54, 142) defining a plurality of stable but not locked angular positions of the said positioning second element about the shaft,
a control third element (57, 144) mounted to rotate freely about the said shaft,
at least one locking device (58, 59, 145) for temporarily locking the rotation of the control third element about the shaft,
**characterized in that**:
the motorizing first element consists of a roller (40), the rotation of which is driven by the bicycle chain or by a flange ring (138) that rotates as one with the shaft (130) of the chainset,
the device comprising a transmission element (50, 63, 67, 146) between the motorizing first element, the positioning second element and the control third element,
the transmission element (50, 63, 67, 146) being able to rotate nonconcentrically relative to the said shaft,
the transmission element (50, 63, 67, 146) carrying three connecting members positioned distant from one another, a follower first connecting member (50a, 63a, 69a, 160) connected to the drive member (49, 62d, 68, 138) of the motorizing first element, a second connecting member (50b, 63c, 70, 162) connected by a pivoting connection to the positioning second element, a third connecting member (50c, 63e, 71, 163) connected by a pivoting connection to the control third element,
the assembly operating in such a way that, with the motorizing first element driven in rotation, the second element held in a stable angular position by the indexing device, and the control third element not locked by the locking device, the transmission element is given an oscillatory movement relative to the second connection with the positioning second element and imparts to the control third element a reciprocating rotary movement about the shaft via its third connection, and
such that if the control third element is temporarily locked by the locking device, the transmission element is given a movement relative to its third connection with the control third element and imparts to the positioning second element a rotation about the shaft via its second connection.

2. Control device according to Claim 1, **characterized in that** the external moving component is the action of pedalling or of rotation of the wheel.

3. Device according to one of Claims 1 and 2, **characterized in that** the drive member is a groove (49) not concentric with the axis of the shaft (45) and present in a roller (40) able to rotate about the axis of the shaft (45), **in that** the transmission element is a ring (50) that has a projecting peg (5a) engaged in the groove (49).

4. Device according to one of Claims 1 to 2, **characterized in that** the drive member is a hub (62d) or a flange ring (138) which is eccentric relative to the axis of the shaft (45, 130) and **in that** the transmission element is a rocker (63) or a ring (146) mounted to rotate on the hub or on the eccentric flange ring, respectively.

5. Device according to one of Claims 1 to 2, **characterized in that** the drive member is a pin (68) which is eccentric relative to the axis of the shaft (45) and **in that** the transmission element is a bar (69) with a central slot (69) along which the pin travels.

6. Device according to Claim 1, **characterized in that** in the transmission element (50, 63, 69, 146) the second connecting member (50b, 63c, 70, 162) and the third connecting member (50c, 63e, 71, 163) are distant from one another and substantially equal distances away from the follower first connecting member (50a, 63a, 69a, 160).

7. Device according to Claim 1, **characterized in that** the positioning element is a rotor (52) mounted to rotate about the shaft and carrying at its periphery a cam (52a) that drives an indexing arm (35) of the mobile derailleur member (40, 62, 67).

8. Device according to Claim 1, **characterized in that** the positioning element (142) comprises a rotor (150) connected to the transmission element (146) via a connecting member (150g, 150h) and a motorizing wheel (151) carrying an indexing arm (127) for indexing the derailleur member (124), the rotor and the motorizing wheel being mounted to rotate about the shaft (130) and connected to one another by an angular compensation spring (152).

9. Device according to Claim 8, **characterized in that** the indexing device (142) of the positioning element (141) comprises two indexing pistons (154, 155) and three fluted regions (150c, 150d, 151c), **in that** the first piston (154) collaborates with a fluted indexing region (150c) of the rotor (150), and **in that** the second piston (155) collaborates with a fluted region (151c) of the motorizing wheel (151) and a fluted locking region (150d) of the rotor (150).

10. Device according to Claim 1 in which the derailleur member is a roller (40) carried by a deformable parallelogram structure comprising arms (25, 26) and a base (27) which are joined together by pivot pins (29, 30, 31, 32), **characterized in that** the indexing arm (35) rotates as one with a yoke (33) mounted on the pivot pin (31) of one of the pivoted connections between one (26) of the link rods and the base (27), **in that** the yoke (33) straddles the said link rod (26), and **in that** an adjustment means allows the angular distance between the yoke (33) and the link rod (26) to be adjusted.

11. Device according to Claim 1, **characterized in that** the control third element (57, 144) has, at its periphery, teeth, each of which has a sloping locking face and a non-locking face for two locking pawls (58, 59, 157, 158).

12. Device according to Claim 11, **characterized in that** each of the pawls (58, 59, 157, 158) is connected to a radial camway (79a, 165a) of a cam (79, 165).

13. Device according to Claim 12, **characterized in that** the cam is driven by a motor (75, 166) that has two directions of rotation.

14. Device according to Claim 13, **characterized in that** the cam (76) has an axial ramp (81) followed by an axial follower finger (83) for returning the cam to a central angular position.

15. Device according to one of Claims 11 to 14, **characterized in that** the control element (57, 144) is driven in one direction of pivoting or the other according to which pawl (58, 59, 157, 158) is engaged in the series of associated teeth of the control element (57, 144).

## Patentansprüche

1. Gangschaltvorrichtung für ein Ketten- und Ritzel-Getriebesystem, umfassend:
ein Kettenschaltglied (40, 62, 67, 124), das in einer quer zu der durch die Kette definierten Ebene beweglich ist,
eine Welle (45, 130),
ein erstes Antriebselement (40, 138), das zur kontinuierlichen Drehung um die Welle unter Wirkung einer äußeren beweglichen Komponente angebracht ist,
wobei das erste Antriebselement ein Antriebsglied (49, 62d, 68, 138) aufweist, das bezüglich der Achse der Welle nicht zentriert oder nicht konzentrisch ist, wodurch die Erzeugung einer periodischen Bewegung im Verlauf ihrer Drehung gestattet wird,
ein zweites Element (52, 142) zur Positionierung der drehbar um die Welle (45, 130) angebrachten Kettenschaltung, das einen Rastarm (35, 127) des Kettenschaltglieds verschieben kann,
eine Rastvorrichtung (52c, 53, 54, 142), die mehrere stabile, aber nicht gesperrte, Winkelstellungen des zweiten Positionierelements um die Welle definiert,
ein drittes Betätigungselement (57, 144), das frei drehbar um die Welle angebracht ist,
mindestens eine Sperrvorrichtung (58, 59, 145) zum vorübergehenden Sperren der Drehung des dritten Betätigungselements um die Welle,
**dadurch gekennzeichnet, dass**
das erste Antriebselement aus einer Rolle (40), die durch die Kette des Fahrrads oder durch einen drehfest mit der Welle (130) der Tretkurbel verbundenen Bund (138) drehangetrieben wird, und
einem Getriebeelement (50, 63, 67, 146) zwischen dem ersten Antriebselement, dem zweiten Positionierelement und dem dritten Betätigungselement besteht,
wobei das Getriebeelement (50, 63, 67, 146) nicht konzentrisch bezüglich der Welle drehbeweglich ist,
wobei das Getriebeelement (50, 63, 67, 146) drei Verbindungsglieder trägt, die voneinander beabstandet angeordnet sind, ein erstes Folger-Verbindungsglied (50a, 63a, 69a, 160), das mit dem Antriebsglied (49, 62d, 68, 138) des ersten Antriebselements verbunden ist, ein zweites Verbindungsglied (50b, 63c, 70, 162), das durch eine Schwenkverbindung mit dem zweiten Positionierelement verbunden ist, ein drittes Verbindungsglied (50c, 63e, 71, 163), das durch eine Schwenkverbindung mit dem dritten Betätigungselement verbunden ist,
wobei die Anordnung so funktioniert, dass, wenn das erste Antriebselement drehangetrieben wird, das zweite Element durch die Rastvorrichtung in einer stabilen Winkelstellung gehalten wird und das dritte Betätigungselement nicht durch die Sperrvorrichtung gesperrt wird, das Getriebeelement in eine Schwenkbewegung bezüglich der zweiten Verbindung mit dem zweiten Positionierelement versetzt wird und dass es das dritte Betätigungselement durch seine dritte Verbindung in eine hin- und hergehende Drehbewegung um die Welle versetzt und dass beim vorübergehenden Sperren des dritten Betätigungselements durch die Sperrvorrichtung das Getriebeelement in eine Bewegung bezüglich seiner dritten Verbindung mit dem dritten Betätigungselement versetzt wird und dass es das zweite Positionierelement durch seine zweite Verbindung in eine Drehung um die Welle versetzt.

2. Schaltvorrichtung nach Anspruch 1, **dadurch gekennzeichnet, dass** die bewegliche äußere Komponente die Wirkung der Pedalbewegung oder der Drehung der Räder ist.

3. Vorrichtung nach einem der Ansprüche 1 bis 2, **dadurch gekennzeichnet, dass** das Antriebsglied eine Nut (49) ist, die nicht konzentrisch zur Achse der Welle (45) ist und in einer um die Achse der Welle (45) drehbeweglichen Rolle (40) ausgebildet ist, und dass das Getriebeelement ein Ring (50) ist, der einen in die Nut (49) eingreifenden vorragenden Stift (5a) aufweist.

4. Vorrichtung nach einem der Ansprüche 1 bis 2, **dadurch gekennzeichnet, dass** das Antriebsglied eine Nabe (62d) oder ein Bund (138) ist, die bzw. der bezüglich der Achse der Welle (45, 130) exzentrisch ist, und dass das Getriebeelement eine Schwinge (63) oder ein Ring (146) ist, die bzw. der drehbar auf der (dem) exzentrischen Nabe bzw. Bund angebracht ist.

5. Vorrichtung nach einem der Ansprüche 1 bis 2, **dadurch gekennzeichnet, dass** das Antriebsglied ein Zapfen (68) ist, der bezüglich der Achse der Welle (45) exzentrisch ist, und dass das Getriebeelement eine Stange (69) mit einem mittleren Schlitz (69) ist, der von dem Zapfen durchquert wird.

6. Vorrichtung nach Anspruch 1, **dadurch gekennzeichnet, dass** auf dem Getriebeelement (50, 63, 69, 146) das zweite Verbindungsglied (50b, 63c, 70, 162) und das dritte Verbindungsglied (50c, 63e, 71, 163) voneinander entfernt sind und sich im Wesentlichen im gleichen Abstand von dem ersten Folger-Verbindungsglied (50a, 63a, 69a, 160) befinden.

7. Vorrichtung nach Anspruch 1, **dadurch gekennzeichnet, dass** das Positionierelement ein Rotor (52) ist, der drehbar um die Welle angebracht ist und an seinem Umfang einen Nocken (52a) zum Antrieb eines Rastarms (35) des beweglichen Kettenschaltglieds (40, 62, 67) trägt.

8. Vorrichtung nach Anspruch 1, **dadurch gekennzeichnet, dass** das Positionierelement (142) einen Rotor (150), der durch ein Verbindungsglied (150g, 150g) mit dem Getriebeelement (146) verbunden ist, und ein einen Rastarm (127) des Kettenschaltglieds (124) tragendes Antriebsrad (151) umfasst, wobei der Rotor und das Antriebsrad drehbar um die Welle (130) angebracht und durch eine Winkelausgleichsfeder (152) miteinander verbunden sind.

9. Vorrichtung nach Anspruch 8, **dadurch gekennzeichnet, dass** die Rastvorrichtung (142) des Positionierelements (141) zwei Rastkolben (154, 155) und drei ausgekehlte Bereiche (150c, 150d, 151c) umfasst, dass der erste Kolben (154) mit einem ausgekehlten Rastbereich (150c) des Rotors (150) zusammenwirkt und dass der zweite Kolben (155) mit einem ausgekehlten Bereich (151c) des Antriebsrads (151) und einem ausgekehlten Verriegelungsbereich (150d) des Rotors (150) zusammenwirkt.

10. Vorrichtung nach Anspruch 1, bei der das Kettenschaltglied eine Rolle (40) ist, die von einer verformbaren Parallelogrammstruktur getragen wird, die Arme (25, 26) und eine Basis (27) aufweist, die durch Gelenkachsen (29, 30, 31, 32) miteinander verbunden sind, **dadurch gekennzeichnet, dass** der Rastarm (35) drehfest mit einem Bügel (33) verbunden ist, der zwischen einem (26) der Schwingarme und der Basis (27) an der Gelenkachse (31) angebracht ist, dass der Bügel (33) den Schwingarm (26) überlappt und dass ein Einstellmittel das Einstellen des Winkelabstands zwischen dem Bügel (33) und dem Schwingarm (26) gestattet.

11. Vorrichtung nach Anspruch 1, **dadurch gekennzeichnet, dass** das dritte Betätigungselement (57, 144) an seinem Umfang Zähne aufweist, die jeweils eine geneigte Sperrfläche und eine nicht sperrende Fläche für zwei Sperrklinken (58, 59, 157, 158) aufweisen.

12. Vorrichtung nach Anspruch 11, **dadurch gekennzeichnet, dass** jede der Klinken (58, 59, 157, 158) mit der radialen Nockenbahn (79a, 165a) eines Nockens (79, 165) verbunden ist.

13. Vorrichtung nach Anspruch 12, **dadurch gekennzeichnet, dass** der Nocken durch einen Motor (75, 166) mit zwei Drehrichtungen angetrieben wird.

14. Vorrichtung nach Anspruch 13, **dadurch gekennzeichnet, dass** der Nocken (76) eine axiale Rampe (81) aufweist, die von einem axialen Folger-Finger (83) für eine Rückführung des Nockens in eine mittlere Winkelstellung gefolgt wird.

15. Vorrichtung nach einem der Ansprüche 11 bis 14, **dadurch gekennzeichnet, dass** in Abhängigkeit von der Klinke (58, 59, 157, 158), die in die Reihe von dem Betätigungselement (57, 144) zugeordneten Zähnen eingreift, das Betätigungselement (57, 144) in die eine oder andere Schwenkrichtung angetrieben wird.
